# EUROPEAN PATENT SPECIFICATION

(11) **EP 1 978 061 B1**
(45) Date of publication and mention of the grant of the patent: **09.11.2011**
(21) Application number: 07707019.1
(22) Date of filing: 18.01.2007
(51) Int. Cl.: C08L 101/10, C08K 5/00, C08L 57/10, C09K 3/10

(54) **CURABLE COMPOSITION**
HÄRTBARE ZUSAMMENSETZUNG
COMPOSITION DURCISSABLE

(30) Priority: 18.01.2006 JP 2006010473
(43) Date of publication of application: 08.10.2008
(73) Proprietor: Kaneka Corporation, Osaka-shi, Osaka 530-8288 (JP)
(72) Inventor: NODA, Kenji, Kakogawa-shi Hyogo 6750062 (JP); YUKIMOTO, Sadao, Hyogo 6550874 (JP)
(74) Representative: Hart-Davis, Jason
(86) International application number: PCT/JP2007/050715
(87) International publication number: WO 2007/083709

(56) References cited:
- EP-A- 1 674 513
- WO-A-99/54386
- WO-A-02/070481
- JP-A- 01 266 155
- JP-A- 2000 191 912
- JP-A- 2002 294 022
- JP-A- 2003 082 192
- JP-A- 2005 290 266
- US-A1- 2001 021 761

## Description

### TECHNICAL FIELD

The present invention relates to a curable composition containing a (meth) acrylic polymer having at least one crosslinkable silyl group, a polyether-based polymer having at least one crosslinkable silyl group, a photopolymerization initiator, and a reinforcing filler as defined in the appended claims.

### BACKGROUND ART

A curable composition containing a polymer having a crosslinkable silyl group is used as a sealing material for buildings which is filled into a space between interior/exterior members of architectural structures and a joint of the joint portion capable of preventing the entry of wind and rain, and as an adhesive by which various base materials are bonded. A so-called modified silicone-based sealing material having a backbone structure made of a polyoxyalkylene polymer having a crosslinkable silyl group has been widely used because of its excellent workability and flexibility in a wide temperature range. However, the modified silicone-based sealing material does not have weatherability enough to comply with needs of long-term duration in recent architectural structures and also has a problem that tack (hereinafter referred to as surface tack) remains on the surface of the sealing material for a long period after execution and thus the surface of the sealing material is stained.

An air curable compound typified by drying oil is added so as to reduce the surface tack (Patent document 1), however, an effect of reducing short-term surface tack is insufficient.

A method of adding a photocurable compound is proposed (Patent document 2). Also, sufficient short-term surface tack reducing effect is not exerted by the method. When the polymerization proceeds for a long period, hardness of the surface increases and the surface may cause cracking.

It is proposed to add a silicone-based surfactant, an air curable compound and a polyoxyalkylene polymer to a modified silicone-based sealing material (Patent document 3). However, sufficient long-term surface tack improving effect is not exerted and also resultant composition is insufficient in weatherability.

A method of using a modified silicone-based sealing material in combination with a silicone-based surfactant, an air curable compound and a photocurable compound (Patent document 4). However, the resultant composition is insufficient in weatherability.
Patent document 1: Japanese Examined Patent Publication (Kokoku) No. 5-82860
Patent document 2: Japanese Examined Patent Publication (Kokoku) No. 62-26349
Patent document 3: Japanese Unexamined Patent Publication (Kokai) No.2000-204346
Patent document 4: Japanese Unexamined Patent Publication (Kokai) No.2000-204347

In addition, WO 99/54386 describes silicone oligomers that can be used in curable compositions, which may further comprise an inorganic filler.

### DISCLOSURE OF THE INVENTION

### Problems to be solved by the Invention

The present invention provides a curable composition which is excellent in storage stability and is capable of forming a rubbery cured article which has improved surface tack after curing and maintains less stained surface for a long period, and also causes neither crack nor discoloration on the surface even when used outdoors for a long period.

### Means for Solving the Problems

Under these circumstances, the present inventors have intensively studied and found that the above problems can be solved by using a curable composition containing a vinyl-based polymer having at least one crosslinkable silyl group and a photopolymerization initiator, and thus the present invention has been completed.

That is, the present invention provides a curable composition according to appended claim 1 containing, as components, (A) a vinyl-based polymer, which is a (meth)acrylic polymer, having at least one crosslinkable silyl group represented by the general formula (1) (hereinafter may simply referred to as a "vinyl-based polymer (A)")

-[Si(R¹)_{2-b}(Y)_{b}O]ₘ₋Si(R²)₃₋ₐ(Y)ₐ (1)

wherein both R¹ and R² represent an alkyl group having 1 to 20 carbon atoms, an aryl group having 6 to 20 carbon atoms, an aralkyl group having 7 to 20 carbon atoms, or a triorganosiloxy group represented by (R')₃SiO- (R' represents a monovalent hydrocarbon group having 1 to 20 carbon atoms and three R'(s) may be the same or different) and, when two or more R¹(s) or R²(s) exist, they may be the same or different; Y represents a hydroxyl group or a hydrolyzable group and, when two or more Y(s) exist, they may be the same or different; a represents 0, 1, 2 or 3; b represents 0, 1 or 2; and m represents an integer of 0 to 19, provided that a + mb ≥ 1, (B) a photopolymerization initiator, and a reinforcing filler as defined in appended claim 1.

The curable composition can further contain (C) a polyether-based polymer having at least one crosslinkable silyl group represented by the general formula (1) (hereinafter may simply referred to as a "polyether-based polymer (C)":

- [Si(R¹)_{2-b}(Y)_{b}O]ₘ-Si(R²)₃₋ₐ(Y)ₐ (1)

wherein both R¹ and R² represent an alkyl group having 1 to 20 carbon atoms, an aryl group having 6 to 20 carbon atoms, an aralkyl group having 7 to 20 carbon atoms, or a triorganosiloxy group represented by (R')₃SiO- (R' represents a monovalent hydrocarbon group having 1 to 20 carbon atoms and three R'(s) may be the same or different) and, when two or more R¹(s) or R²(s) exist, they may be the same or different; Y represents a hydroxyl group or a hydrolyzable group and, when two or more Y(s) exist, they may be the same or different; a represents 0, 1, 2 or 3; b represents 0, 1 or 2; and m represents an integer of 0 to 19, provided that a + mb ≥ 1 is to be satisfied.
A ratio of a weight average molecular weight (Mw) to a number average molecular weight (Mn), (Mw/Mn), measured by gel permeation chromatography of the vinyl-based polymer (A) is preferably less than 1.8.

The vinyl-based polymer (A) is a (meth) acrylic polymer.

The vinyl-based polymer (A) is preferably produced by a living radical polymerization method, and more preferably produced by an atom transfer radical polymerization method.

The vinyl-based polymer (A) preferably has at least one crosslinkable silyl group represented by the general formula (1) at a molecular chain terminus.

The vinyl-based polymer (A) is preferably a polymer obtained by the following steps of:
(1) producing a vinyl-based polymer having halogen at a terminus by radical polymerization of vinyl-based monomer using an organic halide or a halogenated sulfonyl compound as an initiator, and using a transition metal complex as a catalyst;
(2) producing a vinyl-based polymer having an alkenyl group at a terminus by reacting with an oxyanion having an alkenyl group thereby substituting it for a halogen; and
(3) reacting with a hydrosilane compound having a crosslinkable silyl group represented by the general formula (1).

It is preferred that the polyether-based polymer (C) is essentially a polypropylene oxide.

The photopolymerization initiator (B) is preferably a photoradical initiator.

The sealing material of the present invention is obtained by using the above curable composition.

### EFFECT OF THE INVENTION

The curable composition of the present invention can provide a cured article with high-weatherability which nearly eliminates surface tack within a short period after curing and maintains less stained surface over a long period, and also causes neither cracking nor discoloration on the surface.

### BEST MODE FOR CARRYING OUT THE INVENTION

The curable composition of the present invention will be described below.

### [(A) Vinyl-Based Polymer]

The vinyl-based polymer having at least one crosslinkable silyl group represented by the following general formula (1), as the component (A), is to be crosslinked by forming a siloxane bond.

-[Si(R¹)_{2-b}(Y)_{b}O]ₘSi(R²)₃₋ₐ(Y)ₐ (1)

In the above general formula (1), both R¹ and R² are the same or different, and represent an alkyl group having 1 to 20 carbon atoms, an aryl group having 6 to 20 carbon atoms, an aralkyl group having 7 to 20 carbon atoms, or a triorganosiloxy group represented by (R')₃SiO-. R' represents a monovalent hydrocarbon group having 1 to 20 carbon atoms. A plurality of R'(s) may be the same or different). When two or more R¹(s) or R²(s) exist, they may be the same or different.

In the above general formula (1), Y represents a hydroxyl group or a hydrolyzable group. When two or more Y(s) exist, they may be the same or different. The total number of Y(s) is preferably from 1 to 5.

Examples of the hydrolyzable group include, but are not limited to, hydrogen, a halogen atom, an alkoxy group, an acyloxy group, a ketoxymate group, an amino group, an amide group, an aminooxy group, a mercapto group, and an alkenyloxy group. Of these hydrolyzable groups, an alkoxy group is preferred since it is easy to handle because of mild hydrolyzability.

In the general formula (1), a represents 0, 1, 2 or 3; b represents 0, 1 or 2; and m represents an integer. One to three Y(s) can be bonded to one silicon atom a, b and m satisfy the following relation: a + mb ≥ 1. That is, at least one Y is included in the general formula (1).

One, or two or more silicon atoms constituting the crosslinkable silyl group may exist. Since up to about 20 silicon atoms may exist when the silicon atoms are linked through a siloxane bond, m is preferably from 0 to 19.

The monomers constituting the backbone of the vinyl-based polymer having at least one the crosslinkable silyl group include at least one (meth)acrylic monomer, and examples thereof include (meth) acrylic acid-based monomers such as (meth)acrylic acid, methyl (meth)acrylate, ethyl (meth)acrylate, n-propyl (meth)acrylate, isopropyl (meth)acrylate, n-butyl(meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxypropyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, an ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, (meth)acrylate-2-perfluorohexylethyl, 2-perfluorodecylethyl (meth)acrylate, and 2-perfluorohexadecylethyl (meth)acrylate; styrene-based monomers such as styrene, vinyltoluene, α-methylstyrene, chlorostyrene, styrenesulfonic acid, and a salt thereof; fluorine-containing vinyl monomers such as perfluoroethylene, perfluoropropylene, and vinylidene fluoride; silicon-containing vinyl-based monomers such as vinyltrimethoxysilane and vinyltriethoxysilane; maleic anhydride, maleic acid, and a monoalkyl ester and a dialkyl ester of maleic acid; fumaric acid, and a monoalkyl ester and a dialkyl ester of fumaric acid; maleimide-based monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile group-containing vinyl-based monomers such as acrylonitrile and methacrylonitrile; amide group-containing vinyl-based monomers such as acrylamide and methacrylamide; vinyl esters such as vinyl acetate, vinyl propionate, vinyl pivalate, vinyl benzoate, and vinyl cinnamate; alkenes such as ethylene and propylene; conjugated dienes such as butadiene and isoprene; vinyl chloride, vinylidene chloride, allyl chloride, and allyl alcohol.

These monomers may be used alone, or two or more kinds thereof may be used in combination.

The term "(meth)acrylic acid" means acrylic acid and/or methacrylic acid. The same shall apply hereinafter.

The vinyl-based polymer having at least one the crosslinkable silyl group is preferably a (meth)acrylic polymer obtained by synthesizing with the use of 40% by weight or more of a (meth)acrylic acid-based monomer among the above monomers in view of physical properties.

An acrylic polymer obtained by synthesizing with the use of 30% by weight or more of an acrylic acid-based monomer among the above monomers is more preferred.

The molecular weight of the vinyl-based polymer having at least one the crosslinkable silyl group is not specifically limited, and is preferably within the range from 500 to 100,000, and more preferably from 5,000 to 100,000. When the molecular weight is less than 500, it is not easy to exhibit characteristics peculiar to the vinyl-based polymer. In contrast, when the molecular weight is more than 100,000, it may become difficult to handle.

Molecular weight distribution of the vinyl-based polymer having at least one the crosslinkable silyl group, that is, a ratio of the weight average molecular weight (Mw) to the number average molecular weight (Mn), (Mw/M), is not specifically limited. However, a molecular weight distribution is preferably narrow so as to obtain easy handling by adjusting viscosity of the resultant curable composition to a low value and to obtain sufficient physical properties of the cured article. The value of the molecular weight distribution is preferably less than 1.8, more preferably 1.7 or less, still more preferably 1.6 or less, further preferably 1.5 or less, particularly preferably 1.4 or less, and most preferably 1.3 or less. Most popularly, the molecular weight distribution is measured by gel permeation chromatography (GPC). The number average molecular weight can be determined from a polystyrene equivalent value using chloroform or THF as a mobile phase, and using a polystyrene gel column as a column.

The method for synthesis of the vinyl-based polymer having at least one the crosslinkable silyl group is not specifically limited, and various methods can be used. In view of versatility of the monomer and ease of control, preferable methods include a method of directly introducing a crosslinkable silyl group into the backbone using a radical polymerization method, or a method in which a vinyl-based polymer having a specific functional group capable of converting into a crosslinkable silyl group through a single-of several-stage reaction is obtained and this specific functional group is converted into a crosslinkable silyl group.

The radical polymerization method used in the method for synthesis of a vinyl-based polymer having a specific functional group including a crosslinkable silyl group can be classified into a "general radical polymerization method" of simply copolymerizing a monomer having a specific functional group with a vinyl-based monomer using an azo-based compound or a peroxide as a polymerization initiator, and a "controlled radical polymerization method" capable of introducing a specific functional group at the controlled position such as a terminus.

The "general radical polymerization method" is an expedient method. However, by this method, a monomer having a given functional group is introduced into the product polymer only in probabilities. In order to synthesize a polymer of high functionality, this monomer must be used in a fairly large amount, thus controllable scope of the property becomes narrow. When conversely the amount of the monomer is small, the ratio of polymer molecules not provided with the given functional group is increased. Another disadvantage is that since the reaction is a free radical polymerization reaction, the molecular weight distribution is so broadened that only a polymer having a high viscosity can be obtained.

The "controlled radical polymerization method" can be divided into the "chain transfer agent technique" in which a vinyl polymer having a functional group at a molecular chain terminus is produced by carrying out the polymerization reaction using a chain transfer agent having a given functional group, and the "living radical polymerization technique" in which the polymerization proceeds with the growing chain terminus constantly growing without being interrupted by a termination reaction to give a polymer approximating the designed molecular weight.

The "chain transfer agent technique", compared to a general radical polymerization, is capable of giving a polymer of high functionality but a chain transfer agent having a given functional group must be used in a fairly large amount relative to the initiator, with the consequent disadvantage in economics inclusive of the cost of treatment involved. A further disadvantage of the technique is that because it is also a free radical polymerization method as is said "general radical polymerization method", there can be obtained only a polymer having a broad molecular weight distribution and a high viscosity.

Unlike the above polymerization technology, the "living radical polymerization technique" is advantageous in that despite its also being a method for radical polymerization reaction which is generally considered to be hardly controllable because of the high velocity polymerization and high tendency of termination by radical-radical coupling or the like, a termination reaction does not easily take place, thus giving a polymer with a narrow molecular weight distribution (Mw/Mn=about 1.1 to 1.5), and further in that the molecular weight can be freely controlled by adjusting the monomer-initiator charge ratio.

Since "living radical polymerization" is thus capable of giving a polymer having a narrow molecular weight distribution and a low viscosity and enables introduction of a monomer having a given functional group in an almost designated position, it is a further preferred method for producing a vinyl polymer having said given functional group.

In a narrow sense of the term, "living polymerization" means a polymerization in which the molecule grows with its growth termini being constantly activated. Generally, however, the term is used to broadly cover as well a pseudo-living polymerization reaction in which the polymer grows while molecules with an activated terminus and molecules with an inactivated terminus are in equilibrium, and the term as used in this specification also has the latter broad meaning.

"Living radical polymerization" is not limited as long as it is a radical polymerization defined above. Recently, "living radical polymerization" has been studied in earnest by many research groups. By way of illustration, this technology includes the method employing a cobalt porphyrin complex as described in J. Am. Chem. Soc., 116, 7943 (1994); the method using a radical capping agent such as a nitroxide compound as described in Macromolecules, 27, 7228 (1994), and the atom transfer radical polymerization (ATRP) method using an organohalogen compound as the initiator and a transition metal complex as the catalyst.

Among such variations of the "living radical polymerization method", the "atom transfer radical polymerization" method in which a vinyl monomer is polymerized using an organohalogen compound or a sulfonyl halide compound as the initiator and a transition metal complex as the catalyst is still more preferred for the production of said vinyl polymer having a given functional group because, in addition to the above-mentioned advantages of "living radical polymerization", it is capable of giving a polymer having a halogen atom or the like at its terminus, which is comparatively favorable for a functional group exchange reaction, and offers a broad freedom in the initiator and catalyst design.
Regarding this atom transfer radical polymerization method, reference can be made to Matyjaszewski et al.: J. Am. Chem. Soc., 117, 5614 (1995), Macromolecules, 28, 7901 (1995), Science, 272, 866 (1996), WO 96/30421, WO 97/18247, or Sawamoto et al.: Macromolecules, 28, 1721 (1995), among others.

The initiator in the "atom transfer radical polymerization method" includes an organic halide, especially an organic halide having a carbon-halogen bond with high reactivity, or a halogenated sulfonyl compound. The organic halide having a carbon-halogen bond with high reactivity includes a carbonyl compound having halogen at the α-position, and a compound having halogen at the benzyl-position. For example, initiators described in Japanese Unexamined Patent Publication (Kokai) No. 11-130931 and Japanese Unexamined Patent Publication (Kokai) No. 11-158449 can be used. These initiators may be used alone, or two or more kinds thereof may be used in combination.

The transition metal complex used as the catalyst of the "atom transfer radical polymerization method" is not specifically limited and includes, for example, complexes containing Group 7, Group 8, Group 9, Group 10 and Group 11 elements of the Periodic Table as a central metal. A complex of zerovalent copper, monovalent copper, divalent ruthenium, divalent iron or divalent nickel is preferred. A complex of copper is more preferred. These complexes may be used alone, or two or more kinds thereof may be used in combination.

The monovalent copper compound is not specifically limited and includes, for example, cuprous chloride, cuprous bromide, cuprous iodide, cuprous cyanide cuprous oxide and cuprous perchloride. When a copper compound is used, it is possible to add ligands, for example, 2,2'-bipyridyl and a derivative thereof, 1,10-phenanthroline and a derivative thereof, and polyamines such as tetramethylethylenediamine, pentamethyldiethylenetriamine, and hexamethyltris(2-aminoethyl)amine so as to enhance catalytic activity.

A tristriphenylphosphine complex of divalent ruthenium chloride (RuCl₂(PPh₃)₃) is suited for used as the catalyst. When a ruthenium compound is used as the catalyst, aluminum alkoxides can be added as an activating agent. Furthermore, a bistriphenylphosphine complex of divalent iron (FeCl₂(PPh₃)₂), a bistriphenylphosphine complex of divalent nickel (NiCl₂(PPh₃)₂), and a bistributylphosphine complex of divalent nickel (NiBr₂(PBu₃)₂) are suited for use as the catalyst.

The polymerization reaction can be carried out in the absence of a solvent or in various solvents. The solvent is not specifically limited and examples thereof include hydrocarbon-based solvents such as benzene and toluene; ether-based solvents such as diethylether and tetrahydrofuran; halogenated hydrocarbon-based solvents such as methylene chloride and chloroform; ketone-based solvents such as acetone, methyl ethyl ketone, and methyl isobutyl ketone; alcohol-based solvents such as methanol, ethanol, propanol, isopropanol, n-butyl alcohol, and tert-butyl alcohol; nitrile-based solvents such as acetonitrile, propionitrile, and benzonitrile; ester-based solvents such as ethyl acetate and butyl acetate; and carbonate-based solvents such as ethylene carbonate and propylene carbonate. These solvents can be used alone, or two or more kinds thereof may be used in combination.

The "atom transfer radical polymerization method" can be carried out at a temperature within the range from 0 to 200°C, and preferably from room temperature to 150°C.

The vinyl-based polymer having at least one crosslinkable silyl group represented by the general formula (1) will be described by way of specific examples in the following methods [A] to [E], but is not limited thereto.
[A] A method in which a hydrosilane compound having a crosslinkable silyl group is added to a vinyl-based polymer having at least one alkenyl group in the presence of a hydrosilylation catalyst.
[B] A method in which a vinyl-based polymer having at least one hydroxyl group is reacted with a compound having both a crosslinkable silyl group and functional groups capable of reacting a hydroxyl group, such as an isocyanate group.
[C] A method in which a predetermined vinyl-based monomer and a compound having a polymerizable alkenyl group and a crosslinkable silyl group are reacted upon synthesizing a vinyl-based polymer by radical polymerization.
[D] A method in which radical polymerization of a vinyl-based monomer is carried out using a chain transfer agent having a crosslinkable silyl group.
[E] A method in which a vinyl-based polymer having at least one carbon-halogen bond with high reactivity is reacted with a stable carbanion having a crosslinkable silyl group.

Examples of the method for synthesis of the vinyl-based polymer having at least one alkenyl group used in the synthesis method [A] include, but are not limited to, the following methods [A-a] to [A-j].

[A-a] A method in which a predetermined vinyl-based monomer and a compound having both a polymerizable alkenyl group represented by the following general formula (2) and an alkenyl group with low polymerizability are reacted upon synthesizing a vinyl-based polymer by radical polymerization.

H₂C=C(R³)-R⁴-R⁵-C(R⁶)=CH₂ (2)

In the formula, R³ represents hydrogen or a methyl group. R⁴ represents -C(O)O-, or a o-, m- or p-phenylene group. R⁵ represents a direct bond, or divalent organic group having 1 to 20 carbon atoms which may have one or more ether bonds. R⁶ represents hydrogen, an alkyl group having 1 to 10 carbon atoms, an aryl group having 6 to 10 carbon atoms or an aralkyl group having 7 to 10 carbon atoms.

Timing of the reaction with the compound having both of a polymerizable alkenyl group and an alkenyl group with low polymerizability is not specifically limited. When rubbery properties are expected in the resultant crosslinked article, it is preferred to react it as a second monomer through the living radical polymerization at the final stage of the polymerization reaction or after the completion of the reaction of a predetermined vinyl-based monomer.

[A-b] A method in which a compound having at least two alkenyl groups with low polymerizability, such as 1, 5-hexadiene, 1,7-octadiene or 1,9-decadiene through the living radical polymerization at the final stage of the polymerization reaction or after the completion of the reaction of a predetermined vinyl-based monomer upon synthesizing a vinyl-based polymer by the living radical polymerization.

The following methods [A-c] to [A-f] are methods in which the vinyl-based polymer having at least one alkenyl group is obtained from a vinyl-based polymer having at least one carbon-halogen bond with high reactivity. The polymer having at least one carbon-halogen bond with high reactivity can be obtained by methods [E-a] and [E-b] described later.

[A-c] A method in which a vinyl-based polymer having at least one carbon-halogen bond with high reactivity is reacted with an alkenyl group-containing organometal compound typified by an organotin such as allyltributyltin or allyltrioctyltin thereby substituting the halogen with an alkenyl group-containing substituent.

[A-d] A method in which a vinyl-based polymer having at least one carbon-halogen bond with high reactivity is reacted with a stabilized carbanion having an alkenyl group represented by the following general formula (3) thereby substituting the halogen with an alkenyl group.

M⁺C⁻(R⁷)(R⁸)-R⁹-C(R⁶)=CH₂ (3)

In the formula, R⁶ is the same as defined above. Both R⁷ and R⁸ represent an electron withdrawing group capable of stabilizing a carbanion C⁻, or one of them represents the electron withdrawing group and the other one represents hydrogen or an alkyl group having 1 to 10 carbon atoms, or a phenyl group. R⁹ represents a direct bond, or a divalent organic group having 1 to 10 carbon atoms which may have one or more ether bonds. M⁺ represents an alkali metal ion or a quaternary ammonium ion. The electron withdrawing group represented by R⁷ and R⁸ is preferably -CO₂R, -C(O)R or -CN. Herein, R represents hydrogen, an alkyl group having 1 to 10 carbon atoms, an aryl group having 6 to 10 carbon atoms or an aralkyl group having 7 to 10 carbon atoms.

[A-e] A method in which an enolate anion prepared by reacting a vinyl-based polymer having at least one carbon-halogen bond with high reactivity with a simple metallic substance such as zinc or an organometal compound is reacted with an alkenyl group-containing electrophilic compound such as an alkenyl group-containing compound having halogen or a leaving group such as an acetyl group, an alkenyl group-containing carbonyl compound, an alkenyl group-containing isocyanate compound, or an alkenyl group-containing acid halide.

[A-f] A method in which a vinyl-based polymer having at least one carbon-halogen bond with high reactivity is reacted with an alkenyl group-containing oxyanion represented by the following general formula (4) or an alkenyl group-containing carboxylate anion represented by the following general formula (5) thereby substituting the halogen with an alkenyl group-containing substituent.

H₂C=C(R⁶)-R¹⁰-O⁻M⁺ (4)

In the formula, R⁶ and M⁺ are the same as defined above. R¹⁰ represents a divalent organic group having 1 to 20 carbon atoms which may have one or more ether bonds.

H₂C=C(R⁶)-R¹¹-C(O)O⁻M⁺ (5)

In the formula, R⁶ and M⁺ are the same as defined above. R¹¹ represents a direct bond or a divalent organic group having 1 to 20 carbon atoms which may have one or more ether bonds.

Furthermore, the vinyl-based polymer having at least one alkenyl group can be obtained from a vinyl-based polymer having at least one hydroxyl group and examples of a specific method include, but are not limited to, the following methods [A-g] to [A-j]. The vinyl-based polymer having at least one hydroxyl group can be obtained by methods [B-a] to [B-i] described later.

[A-g] A method in which vinyl-based polymer having at least one hydroxyl group is reacted with a base such as sodium hydroxide or sodium methoxide and then reacted with an alkenyl group-containing halide such as allyl chloride.

[A-h] A method in which vinyl-based polymer having at least one hydroxyl group is reacted with an alkenyl group-containing isocyanate compound such as allyl isocyanate.

[A-i] A method in which a vinyl-based polymer having at least one hydroxyl group is reacted with an alkenyl group-containing acid halide such as (meth)acrylic acid chloride in the presence of a base such as pyridine.

[A-j] A method in which a vinyl-based polymer having at least one hydroxyl group is reacted with an alkenyl group-containing carboxylic acid such as acrylic acid in the presence of an acid catalyst.

In the method for synthesis of a vinyl-based polymer having at least one alkenyl group, when a halogen atom is not directly involved in the introduction of an alkenyl group of the above methods [A-a] and [A-b], a living radical polymerization method is preferably used. In this case, the method [A-b] is more preferred since it is easier to control. Among the living radical polymerization method, an atom transfer radical polymerization method is more preferred.

On the other hand, when an alkenyl group is introduced by converting halogen of a vinyl-based polymer having at least one carbon-halogen bond with high reactivity of the methods [A-c] to [A-f], it is preferred to use a vinyl-based polymer having at least one carbon-halogen bond with high reactivity at a terminus obtained by a radical polymerization (atom transfer radical polymerization method) using an organic halide or a halogenated sulfonyl compound as an initiator, and using a transition metal complex as a catalyst. The method [A-f] is more preferred since it is easier to control.

The hydrosilane compound having a crosslinkable silyl group used in the synthesis method [A] is not specifically limited and includes a compound represented by the following general formula (6):

H-[Si(R¹)_{2-b}(Y)_{b}O]ₘ-Si(R²)₃₋ₐ(Y)ₐ (6)

wherein R¹, R², a, b, m and Y are the same as defined above.

In view of easy availability, a compound represented by the following general formula (7) is preferably used.

H-Si(R²)₃₋ₐ(Y)ₐ (7)

wherein R², Y and a are the same as defined above
In the synthesis method [A], when the hydrosilane compound having a crosslinkable silyl group is added to an alkenyl group of the polymer, a transition metal catalyst is usually used as a hydrosilylation catalyst.

Examples of the transition metal catalyst include, but are not limited to, those obtained by dispersing a platinum solid in a carrier such as simple platinum substance, alumina, silica or carbon black; chloroplatinic acid; a complex of chloroplatinic acid with an alcohol, aldehyde or ketone; platinum-olefin complex and platinum(0)-divinyltetramethyldisiloxane complex; and compounds other than the platinum compound, such as RhCl (PPh₃)₃, RhCl₃, RuCl₃, IrCl₃, FeCl₃, AlCI₃, PdCl₂•H₂O, NiCl₂ and TiCl₄. These transition metal catalysts may be used alone, or two or more kinds thereof may be used in combination.

In the synthesis method [B], the method for synthesis of a vinyl-based polymer having at least one hydroxyl group used in the methods [A-g] to [A-j] is not specifically limited and includes the following methods [B-a] to [B-i].

[B-a] A method in which a predetermined vinyl-based monomer and a compound having both a polymerizable alkenyl group represented by the following general formula (8) and a hydroxyl group are reacted when a vinyl-based polymer is synthesized by radical polymerization.

H₂C=C(R³)-R⁴-R⁵-OH (8)

wherein R³, R⁴ and R⁵ are the same as defined above.

Timing of the reaction with the compound having both a polymerizable alkenyl group and a hydroxyl group is not specifically limited. When rubbery properties are expected to the resultant crosslinker, it is preferred to react it as a second monomer through the living radical polymerization at the final stage of the polymerization reaction or after the completion of the reaction of a predetermined vinyl-based monomer.

[B-b] A method in which an alkenyl alcohol such as 10-undecenol, 5-hexenol or allyl alcohol is reacted at the final stage of the polymerization reaction or after the completion of the reaction of a predetermined monomer when a vinyl-based polymer is synthesized by living radical polymerization.

[B-c] A method in which radical polymerization of the vinyl-based monomer is carried out by the method disclosed in Japanese Unexamined Patent Publication (Kokai) No. 5-262808 using a large amount of a hydroxyl group-containing chain transfer agent such as a hydroxyl group-containing polysulfide.

[B-d] A method in which radical polymerization of the vinyl-based monomer is carried out by the methods disclosed in Japanese Unexamined Patent Publication (Kokai) No. 6-239912 and Japanese Unexamined Patent Publication (Kokai) No. 8-283310 using hydrogen peroxide or a hydroxyl group-containing initiator.

[B-e] A method in which radical polymerization of a vinyl-based monomer is carried out by the method disclosed in Japanese Unexamined Patent Publication (Kokai) No. 6-116312 using excess amounts of alcohols.

[B-f] A method in which a hydroxyl group is introduced at a terminus by hydrolyzing halogen of a vinyl-based polymer having at least one carbon-halogen bond with high reactivity, or reacting with a hydroxyl group-containing compound using the method disclosed in Japanese Unexamined Patent Publication (Kokai) No. 4-132706.

[B-g] A method in which a vinyl-based polymer having at least one carbon-halogen bond with high reactivity is reacted with a stabilized carbanion having a hydroxyl group represented by the following general formula (9) thereby substituting the halogen with a hydroxyl group-containing substituent.

M⁺C⁻(R⁷)(R^{B})-R⁹-OH (9)

wherein R⁷, R⁸ and R⁹ are the same as defined above. An electron withdrawing group of R⁷ and R⁸ is preferably -CO₂R, -C(O)R or -CN. Herein, R is the same as defined above.

[B-h] A method in which an enolate anion prepared by reacting a vinyl-based polymer having at least one carbon-halogen bond with high reactivity with a simple metallic substance such as zinc or an organometal compound is reacted with aldehydes or ketones.

[B-i] A method in which a vinyl-based polymer having at least one carbon-halogen bond with high reactivity is reacted with a hydroxyl group-containing oxyanion represented by the following general formula (10) or a hydroxyl group-containing carboxylate anion represented by the following general formula (11) thereby substituting the halogen with a hydroxyl group-containing substituent.

HO-R¹⁰-O⁻M⁺ (10)

wherein R¹⁰ and M⁺ are the same as defined above

HO-R¹¹-C(O)O⁻M⁺ (11)

wherein R¹¹ and M⁺ are the same as defined above.

In the method for synthesis of a vinyl-based polymer having at least one hydroxyl group, when a halogen atom is not directly involved in the introduction of a hydroxyl group of the above described methods [B-a] to [B-e], a living radical polymerization method is preferably used. In this case, the method [B-b] is more preferred since it is easier to control. Among the living radical polymerization methods, an atom transfer radical polymerization method is more preferred.

When a hydroxyl group is introduced by converting halogen of a vinyl-based polymer having at least one carbon-halogen bond with high reactivity of the methods [B-f] to [B-i], it is preferred to use a vinyl-based polymer having at least one carbon-halogen bond with high reactivity at a terminus obtained by radical polymerization (atom transfer radical polymerization method) using an organic halide or a halogenated sulfonyl compound as an initiator, and using a transition metal complex as a catalyst. The method [B-i] is more preferred since it is easier to control.

Examples of the compound having both a crosslinkable silyl group and functional groups capable of reacting with a hydroxyl group, such as an isocyanate group used in the synthesis method [B] include, but are not limited to, Y-isocyanatopropyltrimethoxysilane, Y-isocyanatopropylmethyldimethoxysilane and Y-isocyanatopropyltriethoxysilane. These compounds may be use alone, or two or more kinds thereof may be used in combination.

In the case of the reaction in the synthesis method [B], a known catalyst for urethanization reaction can be used, if necessary.

Examples of the compound having both a polymerizable alkenyl group and a crosslinkable silyl group used in the synthesis method [C] include, but are not limited to, compounds represented by the following general formula (12) such as trimethoxysilylpropyl (meth)acrylate and methyldimethoxysilylpropyl (meth)acrylate.

H₂C=C(R³)-R⁴-R¹²-[Si(R¹)_{2-b}(Y)_{b}O]ₘ-Si(R²)₃₋ₐ(Y)ₐ (12)

wherein R¹, R², R³, R⁴, Y, a, b and m are the same as defined above. R¹² represents a direct bond, or a divalent organic group having 1 to 20 carbon atoms which may have one or more ether bonds. These compounds may be used alone, or two or more kinds thereof may be used in combination.

In the synthesis method [C], timing of the reaction with the compound having both a polymerizable alkenyl group and a crosslinkable silyl group is not specifically limited. When rubbery properties are expected to the resultant crosslinked article, it is preferred to react it as a second monomer through the living radical polymerization at the final stage of the polymerization reaction or after the completion of the reaction of a predetermined vinyl-based monomer.

Examples of the chain transfer agent having a crosslinkable silyl group used in the synthesis method [D] include, but are not limited to, mercaptan having a crosslinkable silyl group and hydrosilane having a crosslinkable silyl group as disclosed in Japanese Examined Patent Publication (Kokoku) No. 3-14068 and Japanese Examined Patent Publication (Kokoku) No. 4-55444. A radical initiator having a crosslinkable silyl group may be used in combination so as to further enhance an introduction ratio of a crosslinkable silyl group.

In the synthesis method [E], the method for synthesis of a vinyl-based polymer having at least one carbon-halogen bond with high reactivity used in the methods [A-c] to [A-f] and [B-f] to [B-i] is not specifically limited and includes the following methods [E-a] and [E-b].

[E-a] Amethod in which radical polymerization is carried out by the method disclosed in Japanese Unexamined Patent Publication (Kokai) No. 4-132706 using a halide such as carbon tetrachloride, ethylene chloride, carbon tetrabromide or methylene bromide as a chain transfer agent (chain transfer agent method).

[E-b] An atom transfer radical polymerization method in which an organic halide or a halogenated sulfonyl compound is used as an initiator and a transition metal complex is used as a catalyst.

The stabilized carbanion having a crosslinkable silyl group used in the synthesis method [E] is not specifically limited and includes a compound represented by the following general formula (13):

M⁺C⁻(R⁷)(R^{B})-R¹³-C(H)(R¹⁴)-CH₂[Si(R¹)_{2-b}(Y)_{b}O]ₘ-Si(R²)₃₋ₐ(Y)ₐ (13)

wherein R¹, R², R⁷, R⁸, Y, a, b and m are the same as defined above. R¹³ represents a direct bond, or a divalent organic group having 1 to 20 carbon atoms which may have one or more ether bonds. R¹⁴ represents hydrogen, or an alkyl group having 1 to 10 carbon atoms, an aryl group having 6 to 10 carbon atoms or an aralkyl group having 7 to 10 carbon atoms. An electron withdrawing group of R⁷ and R⁸ is preferably -CO₂R, -C(O)R or -CN. Herein, R is the same as defined above.

When rubbery properties are required to a foam obtained by expanding and curing the curable composition of the present invention, since it is possible to attain a large molecular weight between crosslinking points which exert a large influence on rubber elasticity, at least one crosslinkable silyl group preferably exists at a terminus of the molecular chain. More preferably, all crosslinkable silyl groups exist at the molecular chain terminus.

The method for producing a vinyl-based polymer having at least one crosslinkable silyl group at the molecular terminus, especially a (meth)acrylic polymer, is disclosed in Japanese Examined Patent Publication (Kokoku) No. 3-14068, Japanese Examined Patent Publication (Kokoku) No. 4-55444 and Japanese Unexamined Patent Publication (Kokai) No. 6-211922. However, since these methods are free radical polymerization methods using the "chain transfer agent method", there is a problem that although the resultant polymer has a crosslinkable silyl group in comparatively high proportion at a molecular chain terminus, it also has generally large molecular weight distribution represented by Mw/Mn of 2 or more and has increased viscosity. Therefore, it is preferred to use the "living radical polymerization method" so as to obtain a vinyl-based polymer which has narrow molecular weight distribution and low viscosity, and also has a crosslinkable silyl group in high proportion at the molecular chain terminus.

Therefore, the vinyl-based polymer having at least one hydroxyl group, halogen or alkenyl group used in the synthesis of the vinyl-based polymer having at least one the crosslinkable silyl group preferably has these functional groups at a molecular chain terminus.

It is preferred to use an organic halide having two or more initiation points or a halogenated sulfonyl compound as the initiator so as to obtain a vinyl-based polymer having at least one crosslinkable silyl group at a molecular chain terminus using a preferable "atom transfer radical polymerization method" among the "living radical polymerization method". The vinyl-based polymer having at least one carbon-halogen bond with high reactivity at a molecular chain terminus thus obtained can be easily converted into a vinyl-based polymer having at least one crosslinkable silyl group at a molecular chain terminus by the above method.

Examples of the organic halide having two or more initiation points or halogenated sulfonyl compound include, but are not limited to, the following compounds.

Specific examples thereof include o-, m-, p-XCH₂-C₆H₄-CH₂X, o-, m-, p-CH₃C(H)(X)-C₆H₄-C(H)(X)CH₃, o-, m-, p-(CH₃)₂C(X)-C₆H₄-C(X)(CH₃)₂ (wherein C₆H₄ represents a phenylene group, and X represents chlorine, bromine or iodine), RO₂C-C(H)(X)-(CH₂)ₙ-C(H)(X)-CO₂R, RO₂C-C(CH₃)(X)-(CH₂)ₙ-C(CH₃)(X)-CO₂R, RC(O)-C(H)(X)-(CH₂)ₙ-C(H)(X)-C(O)R, RC(O)-C(CH₃)(X)-(CH₂)ₙ-C(CH₃)(X)-C(0)R (wherein R represents an alkyl group having 1 to 20 carbon atoms, an aryl group or an aralkyl group, n represents an integer of 0 to 20, and X represents chlorine, bromine or iodine), XCH₂-C(O)-CH₂X, H₃C-C(H)(X)-C(O)-C(H)(X)-CH₃, (H₃C)₂C(X)-C(O)-C(X)(CH₃)₂, C₆H₅C(H)(X)-(CH₂)ₙ-C(H)(X)C₆H₅ (wherein X represents chlorine, bromine or iodine, and n represents an integer of 0 to 20), XCH₂CO₂-(CH₂)ₙ-OCOCH₂X, CH₃C(H)(X)CO₂-(CH₂)ₙ-OCOC(H)(X)CH₃, (CH₃)₂C(X)CO₂-(CH₂)ₙ-OCOC(X)(CH₃)₂ (wherein n represents an integer of 1 to 20), and XCH₂C(O)C(O)CH₂X, CH₃C(H)(X) C(O)C(O)C(H)(X)CH₃, (CH₃)₂C(X)C(O)C(O)C(X)(CH₃)₂, o-, m-, p-XCH₂CO₂-C₆H₄-OCOCH₂X, o-, m-, p-CH₃C(H)(X)CO₂-C₆H₄-OCOC(H)(X)CH₃, o-, m-, p-(CH₃)₂C(X)CO₂-C₆H₄-OCOC(X)(CH₃)₂, o-, m-, p-XSO₂-C₆H₄-SO₂X (wherein X represents chlorine, bromine or iodine). These organic halides may be used alone, or two or more kinds thereof may be used in combination.

It is preferred to use, in addition to a method in which an organic halide having two initiation points or a halogenated sulfonyl compound is used as an initiator in the "atom transfer radical polymerization method", a method in which an organic halide having a crosslinkable silyl group is used, so as to obtain a vinyl-based polymer having a crosslinkable silyl group at the both molecular chain termini.

The organic halide having a crosslinkable silyl group is not specifically limited and includes, for example, a compound represented by the following general formula (14) or (15):

R¹⁵R¹⁶C(X)-R¹⁷-R¹⁸-C(H)(R¹⁹)CH₂-[Si(R¹)_{2-b}(Y)_{b}O]ₘ-Si(R²)₃₋ₐ(Y)ₐ (14)

wherein R¹, R², a, b, m, X and Y are the same as defined above. R¹⁵ and R¹⁶ are the same or different and represent hydrogen, an alkyl group having 1 to 20 carbon atoms, an aryl group having 6 to 20 carbon atoms or an aralkyl group having 7 to 20 carbon atoms. R¹⁵ and R¹⁶ may be combined with each other at the other terminus. R¹⁷ represents -C(O)O-, -C(O)-, or an o-, m-, p-phenylene group. R¹⁸ represents a direct bond, or divalent organic group having 1 to 10 carbon atoms which may have one or more ether bonds. R¹⁹ represents hydrogen, an alkyl group having 1 to 10 carbon atoms, an aryl group having 6 to 10 carbon atoms or an aralkyl group having 7 to 10 carbon atoms, and

(R²)₃₋ₐ(Y)ₐSi-[OSi(R¹)₂-_{b}(Y)_{b}]ₘ-CH₂-C(H)(R¹⁹)-R¹⁸-C(R¹⁵)*(X)-R¹⁷-R¹⁶ (15)

Wherein R¹, R², R¹⁵, R¹⁶, R¹⁷, R¹⁸, R¹⁹, a, b, m, X and Y are the same as defined above.

When the "atom transfer radical polymerization method" is carried out using the organic halide having a crosslinkable silyl group as an initiator, a vinyl-based polymer having a crosslinkable silyl group at one terminus and a carbon-halogen bond with high reactivity at the other terminus can be obtained. When a terminal halogen atom of the vinyl-based polymer is converted into a crosslinkable silyl group-containing substituent using the above method, a vinyl-based polymer having a crosslinkable silyl group at the both molecular chain termini can be obtained.

A vinyl-based polymer having a crosslinkable silyl group at both molecular chain termini can also be obtained by coupling halogen atoms of the vinyl-based polymer using a compound having two or more same or different functional groups capable of substituting for a halogen atom at the terminated end.

Examples of the compound having two or more same or different functional groups capable of substituting for a halogen atom at the terminated end include, but are not limited to, polyol, polyamine, polycarboxylic acid, polythiol, and a salt thereof; and an alkali metal sulfide.

In the "atom transfer radical polymerization method", a vinyl-based polymer having an alkenyl group at one terminus and a halogen atom at the other terminus is obtained with the use of an organic halide having an alkenyl group as an initiator. When a halogen atom at a terminus of the vinyl-based polymer is converted into an alkenyl-containing substituent using the above method, a vinyl-based polymer having an alkenyl group at both molecular chain termini can be obtained. When these alkenyl groups are converted into a crosslinkable silyl group using the above method, a vinyl-based polymer having the crosslinkable silyl group at both molecular chain termini can be obtained.

The vinyl-based polymer having at least one crosslinkable silyl group at the molecular chain terminus can be obtained by optionally using the above methods in combination. Typical synthesis step includes the following Synthesis Examples A and B.

### Synthesis Step a

Synthesis step comprising:
(a-1) a step of synthesizing a vinyl-based polymer having a halogen atom at a terminus by radical polymerization of a vinyl-based monomer using an organic halide or a halogenated sulfonyl compound as an initiator, and using a transition metal complex as a catalyst,
(a-2) a step of synthesizing vinyl-based polymer having an alkenyl group at a terminus by reacting the vinyl-based polymer having a halogen atom at a terminus obtained in the step (a-1) with an oxyanion having an alkenyl group thereby substituting halogen, and
(a-3) a step of adding a hydrosilane compound having a crosslinkable silyl group represented by the general formula (1) to a terminal alkenyl group of a vinyl-based polymer having an alkenyl group at a terminus obtained in the step (a-2) thereby converting it into a substituent having a crosslinkable silyl group.

### Synthesis Step b

Synthesis step comprising:
(b-1) a step of synthesizing a vinyl-based polymer by polymerizing a vinyl-based monomer using a living radical polymerization method,
(b-2) a step of synthesizing a vinyl-based polymer having an alkenyl group at a terminus by reacting the vinyl-based polymer obtained in the step (b-1) with a compound having at least two alkenyl groups with low polymerizability, and
(b-3) a step of adding a hydrosilane compound having a crosslinkable silyl group represented by the general formula (1) to a terminal alkenyl group of a vinyl-based polymer having an alkenyl group at a terminus obtained in the step (b-2) thereby converting it into a substituent having a crosslinkable silyl group.

### [Photopolymerization initiator (B)]

The curable composition of the present invention contains a photopolymerization initiator (B).

The photopolymerization initiator (B) may be a photopolymerization initiator which is usually used and examples thereof include a photoradical polymerization initiator, a photocation polymerization initiator and a photoanion polymerization initiator. Among these initiators, a photoradical type photopolymerization initiator (photoradical initiator) is preferred. Examples of the photoradical polymerization initiator (photoradical initiator) include a compound which is decomposed into a radical upon exposure to light such as ultraviolet light or visible light, a compound capable of generating a radical through hydrogen abstraction, and a compound capable of generating a radical through transfer such as electron transfer. Among these compounds, a compound having polymerization initiation ability to an acrylate ester or a methacrylate ester is preferred.

Examples of the photoradical initiator include, but are not limited, to acetophenone, propiophenone, benzophenone, xanthol, fluorein, benzaldehyde, anthraquinone, triphenylamine, carbazole, 3-methylacetophenone, 4-methylacetophenone, 3-pentylacetophenone, 2,2-diethoxyacetophenone, 4-methoxyacetophene, 3-bromoacetophene, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoyl, benzoin methyl ether, benzoin butyl ether, bis(4-dimethylaminophenyl)ketone, benzylmethoxyketal and 2-chlorothioxanthone. These photoradical initiators may be used alone, or two or more kinds thereof may be used in combination.

The photopolymerization initiator (B) is preferably added in the amount of 0.1 to 10 parts by weight based on 100 parts by weight of the vinyl-based polymer (A) or the total amount of the vinyl-based polymer (A) and polyether-based polymer (C), when the curable composition further contains the polyether-based polymer (C), (hereinafter may be referred to as "the total amount of a polymer having at least one crosslinkable silyl group"). When the amount is less than 0.1 part by weight, sufficient effect is not exerted. In contrast, when the amount is more than 10 parts by weight, an adverse influence may be exerted on physical properties.

The curable composition of the present invention can be used in combination with an auxiliary photopolymerization initiator (hereinafter referred to as a sensitizer). The sensitizer is a compound used to promote polymerization of a photopolymerizable compound whose polymerization has been initiated by a photopolymerization initiator. As the sensitizer, an amine-based compound is used. Examples thereof include triethanolamine, methyldiethanolamine, triisopropanolamine, methyl 4-dimethylaminobenzoate, ethyl 4-dimethylaminobenzoate, isoamyl 4-dimethylaminobenzoate, 2-dimethylaminoethyl benzoate, 2-ethylhexyl 4-dimethylaminobenzoate, N,N-dimethylparatoluidine, 4,4'-bis(dimethylamino)benzophenone (vernacular term: Michler's ketone), 4,4'-bis(diethylamino)benzophenone, and 4,4'-bis(ethylmethylamino)benzophenone. These amine-based compounds may be used alone, or two or more kinds thereof may be used in combination. Also, other auxiliary photopolymerization initiators may be used in combination. Examples of the other auxiliary photopolymerization initiator include an alkoxyanthracene-based compound and a thioxanthone-based compound.

### [Polyether-Based Polymer (C)]

The curable composition of the present invention can further contain, as the component (C), a polyether-based polymer having at least one crosslinkable silyl group represented by the general formula (1):

-[Si(R¹)_{2-b}(Y)_{b}O]ₘ-Si(R²)₃₋ₐ(Y)ₐ (1)

wherein both R¹ and R² represent an alkyl group having 1 to 20 carbon atoms, an aryl group having 6 to 20 carbon atoms, an aralkyl group having 7 to 20 carbon atoms, or a triorganosiloxy group represented by (R')₃SiO- (R' represents a monovalent hydrocarbon group having 1 to 20 carbon atoms and three R'(s) may be the same or different) and, when two or more R¹(s) or R²(s) exist, they may be the same or different; Y represents a hydroxyl group or a hydrolyzable group and, when two or more Y(s) exist, they may be the same or different; a represents 0, 1, 2 or 3; b represents 0, 1 or 2; and m represents an integer of 0 to 19, provided that a + mb ≥ 1 is to be satisfied.
The curable composition of the present invention realizes a rubbery cured article having low modulus and high elongation by using the polyether-based polymer (C), and also can form a rubbery cured article having high modulus and low elongation according to the applications. That is, in the curable composition of the present invention, the amount and the kind of the polyether-based polymer (C) can be appropriately set according to the applications so as to form a cured article having desired rubber physical properties.

The polyether-based polymer (C) may or may not contain a urethane bond in the backbone. It is preferred that the backbone of the polyether-based polymer (C) is essentially polypropylene oxide. As used herein, the expression that "backbone is essentially polypropylene oxide" means that a propylene oxide unit accounts for 50% or more, preferably 70% or more, and more preferably 90% or more of a repeating unit constituting the backbone. Since handling properties are improved when the composition has low viscosity, a molecular weight distribution (Mw/Mn) of the polypropylene oxide-based polymer is more preferably 1.5 or less.

The crosslinkable silyl group in the component (C) is represented by the general formula (1), and the symbols in the formula are as describe above. The crosslinkable silyl group in the component (C) have the same as or different from that of the crosslinkable silyl group of the component (A).

The number of the crosslinkable silyl groups in the polyether-based polymer (C) is at least one in view of curability of the composition, preferably more than one on average, more preferably from 1.1 to 4.0 on average, and still more preferably from 1.5 to 2.5 on average. The crosslinkable functional group preferably exists at a terminus of the polyether-based polymer in view of rubber elasticity of the cured article. More preferably, the functional group exists at both ends of the polymer.

The method for producing a polyether-based polymer (C) is not specifically limited and may be conventionally known method and includes, for example, production methods described in Japanese Unexamined Patent Publication (Kokai) No. 50-156599 and Japanese Unexamined Patent Publication (Kokai) No. 55-125121.

Examples of the trade name thereof include, but are not limited to, MS polymer-S-203 and S-303 (manufactured by Kaneka Corporation).

Regarding the content of the polyether-based polymer (C) in the curable composition of the present invention, a mixing ratio of the vinyl-based polymer (A) to the polyether-based polymer (C) is preferably within the range from 99/1 to 1/99, more preferably from 95/5 to 5/95, and still more preferably from 70/30 to 30/70, in terms of a weight ratio. In the case of a less blend ratio of the vinyl-based polymer (A), excellent weatherability as one of the effects of the present invention may not easily exerted.

### [Curable Composition]

The curable composition of the present invention can contain, in addition to the vinyl-based polymer (A), the photopolymerization initiator (B) and the polyether-based polymer (C), the following various additives as components for the purpose of adjusting various physical properties and mechanical properties.

### (Tin-based curing catalyst)

The curable composition of the present invention may further contain a tin-based curing catalyst. Examples of the tin-based curing catalyst include dialkyltin carboxylates such as dibutyltin dilaurate, dibutyltin diacetate, dibutyltin diethylhexanolate, dibutyltin dioctate, dibutyltin dimethylmaleate, dibutyltin diethylmaleate, dibutyltin dibutylmaleate, dibutyltin diisooctylmaleate, dibutyltin ditridecylmaleate, dibutyltin dibenzylmaleate, dibutyltin maleate, dioctyltin diacetate, dioctyltin distearate, dioctyltin dilaurate, dioctyltin diethylmaleate, and dioctyltin diisooctylmaleate; dialkyltin oxides such as dibutyltin oxide, dioctyltin oxide, and a mixture of dibutyltin oxide and a phthalate ester; a reaction product of a tetravalent tin compound such as dialkyltin oxide or dialkyltin diacetate with a low molecular silicon compound having a hydrolysable silyl group such as tetraethoxysilane, methyltriethoxysilane, diphenyldimethoxysilane or phenyltrimethoxysilane; divalent tin compounds such as tin octylate, tin naphthate, and tin stearate; monobutyltin compounds such as monobutyltin trisoctoate and monobutyltin triisopropoxide, and monoalkyltins such as a monooctyltin compound; reaction products and mixtures of an amine-based compound and an organotin compound, such as a reaction product and a mixture of laurylamine and tin octylate; chelate compounds such as dibutyltin bisacetylacetonate, dioctyltin bisacetylaetonate, dibutyltin bisethylacetonate, and dioctyltin bisethylacetonate; and tin alcolates such as dibutyltin dimethylate, dibutyltin diethylate, dioctyltin dimethylate, and diocyltin diethylate.
Among these tin-based curing catalysts, chelate compounds such as dibutyltin bisacetylacetonate, and tin alcolates are more preferred because of high activity which is useful as a silanol condensation catalyst. Also dibutyltin dilaurate is preferred because of less coloration of the final curable composition, low cost and easy availability.

These tin-based curing catalysts may be used alone, or two or more kinds thereof may be used in combination.
The amount of the tin-based curing catalyst is preferably from about 0.1 to 20 parts by weight, and more preferably from about 0.5 to 10 parts by weight, based on 100 parts by weight of the vinyl-based polymer (A), or the total amount of the polymer having at least one crosslinkable silyl group. When the amount of the tin-based curing catalyst is less than the above range, a curing rate may decreases and sufficient curing reaction does not easily promotes. In contrast, when the amount of the tin-based curing condensation catalyst is more than the above range, local heat generation or expansion arises upon curing and it may become difficult to obtain a good cured article, and also pot life is shortened and workability tends to deteriorate.

### (Other Curing Catalyst)

The polymer having a crosslinkable silyl group is crosslinked and cured by forming a siloxane bond in the presence or absence of conventionally known various condensation catalysts. Cured articles having various properties such as rubbery and resinous cured articles can be formed according to the molecular weight and backbone skeleton of the polymer.

As the condensation catalyst, the following catalysts can be used in addition to the tin-based curing catalysts described above. Examples of the catalyst include silanol condensation catalysts, for example, titanate esters such as tetrabutyl titanate and tetrapropyl titanate; organoaluminum compounds such as aluminum trisacetylacetonate, aluminum trisethylacetoacetate, and diisopropoxyaluminum ethylacetoacetate; chelate compounds such as zirconium tetraacetylacetonate and titanium tetraacetylacetonate; lead octylate; amine-based compounds such as butylamine, octylamine, laurylamine, dibutylamine, monoethanolamine, diethanolamine, triethanolamine, diethylenetriamine, triethylenetetramine, oleylamine, cyclohexylamine, benzylamine, diethylaminopropylamine, xylylenediamine, triethylene, diamine, guanidine, diphenylguanidine, 2,4,6-tris(dimethylaminomethyl)phenol, morpholine, N-methylmorpholine, 2-ethyl4-methylimidazole, 1,8-diazabicyclo(5,4,0)undecene-7(DBU), or salts of these amine-based compound with carboxylic acid; low molecular weight polyamide resins obtained from excess polyamine and polybasic acid; reaction products of excess polyamine with an epoxy compound; and silane coupling agents having an amino group such as γ-aminopropyltrimethoxysilane and N-(β-aminoethyl)-γ-aminopropylmethyldimethoxysilane; and known silanol condensation catalysts such as acidic catalysts and basic catalysts.

These catalysts may be used alone, or two or more kinds thereof may be used in combination. The amount of the condensation catalyst is preferably from about 0.1 to 20 parts by weight, and more preferably from 0.5 to 10 parts by weight, based on 100 parts by weight of the vinyl-based polymer (A) or the total amount of the polymer having at least one crosslinkable silyl group. When the amount of the silanol condensation catalyst is less than the above range, a curing rate may decreases and sufficient curing reaction does not easily promotes. In contrast, when the amount of the silanol condensation catalyst is more than the above range, local heat generation or expansion arises upon curing and it may become difficult to obtain a good cured article, and also pot life becomes too short and it is not preferred in view of workability.

In the curable composition of the present invention, a silicon compound having no silanol group, which is represented by the general formula (28):

R²⁴_{c}Si(OR²⁵)_{4-c} (28)

wherein R²⁴ and R²⁵ each independently represents a substituted or unsubstituted hydrocarbon group having 1 to 20 carbon atoms and, when two or more R²⁴(s) or R²⁵(s) exist, they may be the same of different, and c is any one of 0, 1, 2 and 3, may be added so as to more enhance activity of the condensation catalyst.

The silicon compound is not particularly limited and is preferably a silicon compound of the general formula (28) in which R²⁴ is an aryl group having 6 to 20 carbon atoms, such as phenyltrimethoxysilane, phenylmethyldimethoxysilane, phenyldimethylmethoxysilane, diphenyldimethoxysilane, diphenyldiethoxysilane or triphenylmethoxysilane because a large effect of promoting the curing reaction of the composition is exerted. In particular, Diphenyldimethoxysilane and diphenyldiethoxysilane are most preferred in view of low cost and easy availability.

The amount of the silicon compound is preferably from about 0.01 to 20 parts by weight, and more preferably from 0.1 to 10 parts by weight, based on 100 parts by weight of the vinyl-based polymer (A) or the total amount of the polymer having at least one crosslinkable silyl group. When the amount of the silicon compound is less than the above range, the effect of increasing the curing reaction may deteriorate. In contrast, when the amount of the silicon compound is more than the above range, hardness and tensile strength of the cured article may decrease.

### (Adhesion-imparting agent)

To the composition of the present invention, silane coupling agents and adhesion-imparting agents other than the silane coupling agent can be added. When the adhesion-imparting agent is added, risk of peeling of the sealing material from the adherend such as a siding board can be reduced by varying a joint width through an external force. In some case, it becomes unnecessary to use a primer used to improve adhesion and simplification of an execution working is expected. Specific examples of the silane coupling agent include isocyanate group-containing silanes such as γ-isocyanatepropyltrimethoxysilane, γ-isocyanatepropyltriethoxysilane, γ-isocyanatepropylmethyldiethoxysilane, and γ-isocyanatepropylmethyldimethoxysilane; amino group-containing silanes such as γ-aminopropyltrimethoxysilane, γ-aminopropyltriethoxysilane, γ-aminopropylmethyldimethoxysilane, γ-aminopropylmethyldiethoxysilane, N-(β-aminoethyl)-γ-aminopropyltrimethoxysilane, N-(β-aminoethyl)-γ-aminopropylmethyldimethoxysilane, N-(β-aminoethyl)-γ-aminopropyltriethoxysilane, N-(β-aminoethyl)-γ-aminopropylmethyldiethoxysilllane, γ-ureidepropyltrimethoxysilane, N-phenyl-γ-aminopropyltrimethoxysilane, N-benzyl-γ-aminopropyltrimethoxysilane, and N-vinylbenzyl-γ-aminopropyltriethoxysilane; mercapto group-containing silanes such as γ-mercaptopropyltrimethoxysilane, γ-mercaptopropyltriethoxysilane, γ-mercaptopropylmethyldimethoxysilane, and γ-mercaptopropylmethyldiethoxysilane; epoxy group-containing silanes such as γ-glycidoxypropyltrimethoxysilane, γ-glycidoxypropyltriethoxysilane, γ-glycidoxypropylmethyldimethoxysilane, 2-(3,4-epoxycyclohexyl)ethyltrimethoxysilane, and 2-(3,4-epoxycyclohexyl)ethyltriethoxysilane; carboxysilanes such as β-carboxyethyltriethoxysilane, β-carboxyethylphenylbis(2-methoxyethoxy)silane, and N-(β-carboxymethyl)aminoethyl-γ-aminopropyltrimethoxysilane ; vinyl type unsaturated group-containing silanes such as vinyltrimethoxysilane, vinyltriethoxysilane, γ-methacryloyloxypropylmethyldimethoxysilane, and γ-acryloyloxypropylmethyltriethoxysilane; halogen-containing silanes such as γ-chloropropyltrimethoxysilane; and isocyanurate silanes such as tris(trimethoxysilyl)isocyanurate. It is also possible to use derivatives obtained by modifying these silane coupling agents such as an amino-modified silyl polymer, a silylated amino polymer, an unsaturated aminosilane complex, a phenylamino long chain alkylsilane, an aminosilylated silicone, and silylated polyester, as the silane coupling agent.

The silane coupling agent is preferably used in the amount within the range from 0.1 to 20 parts by weight, and more preferably from 0.5 to 10 parts by weight, based on 100 parts by weight of the vinyl-based polymer (A) or the total amount of the polymer having at least one crosslinkable silyl group. Regarding the effect of the silane coupling agent to added to the curable composition of the present invention, when used in various adherends, for example, inorganic base materials such as glass, aluminum, stainless steel, zinc, copper and mortar, or organic base materials such as polyvinyl chloride, acryl, polyester, polyethylene, polypropylene and polycarbonate, remarkable effect of improving adhesion is exerted under non-primer conditions or primer treated conditions. When used under non-primer conditions, particularly remarkable effect of improving adhesion to various adherends is exerted.

Specific examples other than the silane coupling agent include, but are not limited to, an epoxy resin, a phenol resin, sulfur, alkyl titanates, and an aromatic polyisocyanate.

These adhesion-imparting agents may be used alone, or two or more kinds thereof may be used in combination. The addition of these adhesion-imparting agents enables an improvement in adhesion to the adherend. It is preferred to use 0.1 to 20 parts by weight of the silane coupling agent among the adhesion-imparting agent in combination so as to improve adhesion, especially adhesion to the surface of the metal adherend such as an oil pan, although there is not specific limitation.

### (Plasticizer)

To the curable composition of the present invention, various plasticizers may be used, if necessary. When the plasticizer is used in combination with the filler described hereinafter, it is advantageous since it is possible to increase elongation of the cured article or to mix with a large amount of the filler. However, it is not necessary to add the plasticizer. The plasticizer is not particularly limited and is selected according to the purposes such as adjustment of physical properties and adjustment of properties. Examples thereof include phthalate esters such as dibutyl phthalate, diheptyl phthalate, di(2-ethylhexyl) phthalate, diisodecyl phthalate, and butylbenzyl phthalate; non-aromatic dibasic acid esters such as dioctyl adipate, dioctyl sebacate, dibutyl sebacate, and isodecyl succinate; aliphatic esters such as butyl oleate and methyl acetylricinoleate; esters of polyalkylene glycol, such as diethylene glycol dibenzoate, triethylene glycol dibenzoate, and pentaerythritol ester; phosphate esters such as tricresyl phosphate and tributyl phosphate; trimellitate esters; polystyrenes such as polystyrene and poly-α-methylstyrene; polybutadiene, polybutene, polyisobutylene, butadiene-acrylonitrile, polychloroprene; chlorinated paraffins; hydrocarbon-based oils such as alkyldiphenyl and partially hydrogenated terphenyl; process oils; polyetherpolyols such as polyethylene glycol, polypropylene glycol and polytetramethylene glycol, and polyethers such as derivatives in which a hydroxyl group of these polyetherpolyols is converted into an ester group or an ether group; epoxydized unsaturated fats and oils, epoxydized unsaturated fatty acid esters, alicyclic epoxy compounds, epoxy plasticizers such as compound shown in epichlorohydrin derivatives and mixtures thereof, for example, epoxydized soybean oil, epoxydized linseed oil, di-(2-ethylhexyl)4,5-epoxycyclohexane-1,2-dicarboxylate (E-PS), epoxyoctyl stearate, and epoxybutyl stearate. Among these, E-PS is particularly preferred. When a compound having an epoxy group is used, recovery of the cured article can be enhanced. Examples thereof include polyester-based plasticizers obtained from dibasic acids such as sebacic acid, adipic acid, azelaic acid and phthalic acid with dihydric alcohols such as ethylene glycol, diethylene glycol, triethylene glycol, propylene glycol and dipropylene glycol; and vinyl-based polymers obtained by polymerizing a vinyl-based monomer such as an acrylic plasticizer using various methods.

The addition of a high molecular plasticizer as a polymer having a number average molecular weight of 500 to 15,000 makes it possible to adjust viscosity and slump property of the curable composition, and mechanical characteristics such as tensile strength and elongation of the cured article obtained by curing the composition and to maintain initial physical properties for a long period as compared with the case of using a low molecular plasticizer as a plasticizer containing no polymer component in the molecule. When used outdoors, bleed of the plasticizer onto the surface layer is suppressed and dust scarcely adheres. When a coating material is applied on the surface of the curable composition, softening of the coating film and stains of the coating film are less likely to occur, and thus excellent appearance can be maintained for a long period. The high molecular plasticizer may have a functional group or not, although there is no specific limitation.

It was descried that the number average molecular weight of the high molecular plasticizer is from 500 to 15,000, and the number average molecular weight of the high molecular plasticizer is preferably from 800 to 10,000, and more preferably from 1,000 to 8,000. When the molecular weight is too low, the plasticizer bleeds with a lapse of time and initial physical properties may not be maintained for a long period. When the molecular weight is too high, viscosity increases and workability deteriorates.

Among these high molecular plasticizers, those which are compatible with the vinyl-based polymer (A) or a polymer having at least one crosslinkable silyl group are preferred. In view of compatibility, weatherability and heat resistance, a vinyl-based polymer is preferred. Among the vinyl-based polymer, a (meth)acrylic polymer is preferred and an acrylic polymer is more preferred. Examples of the method for synthesis of the acrylic polymer include those obtained by a conventional solution polymerization and a non-solvent type acryl polymer. The latter acrylic plasticizer is more preferred to the purpose of the present invention because it is produced by a high-temperature continuous polymerization method (USP4414370, Japanese Unexamined Patent Publication (Kokai) No. 59-6207, Japanese Examined Patent Publication (Kokoku) No. 5-58005, Japanese Unexamined Patent Publication (Kokai) No. 1-313522, and USP5010166) using neither a solvent nor a chain transfer agent. Examples thereof include, but are not limited to, ARUFON UP-1000, UP-1020 and UP-1110 manufactured by Toa Gosei Co., Ltd.; and JDX-P1000, JDX-P1010 and JDX-P1020 manufactured by Johnson Polymer Co., Ltd. As a matter course, a living radical polymerization method can be exemplified as the other synthesis method. This method is preferred because the polymer has narrow molecular weight distribution and low viscosity can be realized. An atom transfer radical polymerization method is more preferred, but there is no limitation.

The molecular weight distribution of the high molecular plasticizer is not particularly limited but is preferably narrow, and is preferably less than 1.8, more preferably 1.7 or less, still more preferably 1.6 or less, further preferably 1.5 or less, particularly preferably 1.4 or less, and most preferably 1.3 or less.

These plasticizers including the high molecular plasticizer may be used alone, or two or more kinds thereof may be used in combination, but are not necessarily required. If necessary, the high molecular plasticizer may be used in combination with the low molecular plasticizer as long as an adverse influence is not exerted on physical properties.

These plasticizers can also be mixed upon production of the polymer.

The amount of the plasticizer is not particularly limited and is preferably from 5 to 800 parts by weight, more preferably from 10 to 600 parts by weight, and still more preferably from 10 to 500 parts by weight, based on 100 parts by weight of the vinyl-based polymer (A) or the total amount of the polymer having at least one crosslinkable silyl group. When the amount, is less than 5 parts by weight, it becomes impossible to exert the effect useful for the plasticizer. In contrast, when the amount is more than 800 parts by weight, the cured article may lack mechanical strength.

### (Filler)

In the curable composition of the present invention, a reinforcing filler is used, selected from the group consisting of : wood flour, pulp, cotton chip, asbestos, mica, walnut husk powder, rice hull powder, graphite, china clay, carbon black; fillers such as ground calcium carbonate, colloidal calcium carbonate, magnesium carbonate, diatomaceous earth, calcined clay, clay, talc, titanium oxide, bentonite, organic bentonite, ferric oxide, red iron oxide, fine aluminum powder, flint power, zinc oxide, active zinc oxide, zinc dust, zinc carbonate, shirasu (volcanic soil) balloon; and fibrous fillers such as asbestos, glass fiber and glass filament, carbon fiber, Kevlar fiber, and polyethylene fiber.

Among these fillers, dolomite, carbon black, calcium carbonate, titanium oxide, and talc are preferred.

When a cured article having high strength is obtained using these fillers, it is possible to mainly add fillers selected from carbon black, surface-treated fine calcium carbonate, calcined clay, clay and active zinc powder.

When a cured article having low strength and large elongation is obtained, it is possible to add filler selected mainly from titanium oxide, calcium carbonate, talc, ferric oxide, zinc oxide and shirasu balloon. When calcium carbonate has a small specific surface area, sufficient effect of improving breaking strength, breaking elongation, adhesion and weatherable adhesion properties of the cured article may not be exerted. As the value of the specific surface area increases, larger effect of improving breaking strength, breaking elongation, adhesion and weatherable adhesion properties of the cured article is exerted.

Furthermore, calcium carbonate is preferably surface-treated with a surface treating agent. It is considered that when the surface-treated calcium carbonate is used, the effect of improving workability of the composition of the present invention is improved as compared with the case of using the non-surface-treated calcium carbonate, and thus the effect of improving adhesion and weatherable adhesion properties of the curable composition is more improved. As the surface treating agent, organic matters and various surfactants such as fatty acid, fatty acid soap and fatty acid ester; and various coupling agents such as a silane coupling agent and a titanate coupling agent are used. Specific examples thereof include, but are not limited to, fatty acids such as caproic acid, caprylic acid, pelargonic acid, capric acid, undecanoic acid, lauric acid, myristic acid, palmitic acid, stearic acid, behenic acid, and oleic acid; salts such as sodium and potassium of fatty acids; and alkyl esters of fatty acids. Specific examples of the surfactant include sulfate ester type anionic surfactants such as polyoxyethylene alkyl ether sulfate ester and long chain alcohol sulfate ester, and a sodium salt and a potassium salt thereof; and sulfonic acid type anionic surfactants such as alkylbenzenesulfonic acid, alkylnaphthalenesulfonic acid, paraffinsulfonic acid, α-olefinsulfonic acid and alkylsulfonsuccinic acid, and a sodium salt and a potassium salt thereof. The amount of the surface treating agent to be used for surface treatment is preferably within the range from 0. 1 to 20% by weight, and more preferably from 1 to 5% by weight, based on calcium carbonate. When the amount is less than 0.1% by weight, sufficient effect of improving workability, adhesion and weatherable adhesion properties may not be exerted. In contrast, when the amount is more than 20% by weight, storage stability of the curable composition may deteriorate.

In case of using calcium carbonate, when the effect of improving thixotropy of the composition and breaking strength, breaking elongation, adhesion and weatherable adhesion properties of the cured article are particularly expected, colloidal calcium carbonate is preferably used.

On the other hand, ground calcium carbonate may be added for the purpose of decreasing viscosity of the composition and increasing the amount, and reducing the cost. When this ground calcium carbonate is used, the followings can be optionally used.

The ground calcium carbonate is obtained by mechanically grinding natural chalk (Paris white), marble or limestone. The grinding method includes a dry method and a wet method, and a wet ground product is not preferred because it may deteriorate storage stability of the curable composition of the present invention. The ground calcium carbonate is classified into products having various average particle diameters. When the effect of improving breaking strength, breaking elongation, adhesion and weatherable adhesion properties of the cured article is expected, the value of the specific surface area is preferably 1.5 m²/g or more and 50 m²/g or less, more preferably 2 m²/g or more and 50 m²/g or less, still more preferably 2.4 m²/g or more and 50 m²/g or less, and particularly preferably 3 m²/g or more and 50 m²/g or less. When the specific surface area is less than 1.5 m²/g, sufficient improving effect may not be exerted. As a matter of course, the specific surface area may not be within the above range for the purpose of only decreasing viscosity or increasing the amount.

The value of the specific surface area means a measured value obtained by using, as a measuring method, an air permeation method (method of determining a specific surface area from permeability of the air to a power filled layer) carried out in accordance with JIS K 5101. It is preferred to use a specific surface area Model SS-100 manufactured by Shimadzu Corporation as a measuring equipment.

These fillers may be used alone, or two or more kinds thereof may be used in combination. When ground calcium carbonate having a specific surface area of 1.5 m²/g or more is used in combination with colloidal calcium carbonate, an increase in viscosity of the composition is suppressed, and thus the effect of improving breaking strength, breaking elongation, adhesion and weatherable adhesion properties of the cured article can be considerably expected.

The amount of the filler to be added is preferably within the range from 5 to 5,000 parts by weight, more preferably from 10 to 2,500 parts by weight, and particularly preferably from 15 to 1,500 parts by weight, based on 100 parts by weight of the vinyl-based polymer (A) or the total amount of the polymer having at least one crosslinkable silyl group. When the amount is less than 5 parts by weight, sufficient effect of improving breaking strength, breaking elongation, adhesion and weatherable adhesion properties of the cured article may not be exerted. In contrast, when the amount is more than 5,000 parts by weight, workability of the curable composition may deteriorate. These fillers may be used alone, or two or more kinds thereof may be used in combination

### (Fine hollow center particles)

For the purpose of weight saving and cost reduction without causing drastical deterioration of physical properties, fine hollow center particles may be used in combination with these reinforcing fillers.

Examples of the fine hollow center particles (hereinafter referred to as a balloon) include, but are not limited to, fine hollow center materials made of an inorganic or organic material having a diameter of 1 mm or less, preferably 500 µm or less, and more preferably 200 µm or less, as described in "Latest Techniques of Functional Fillers" (CMC). Fine hollow center material having a true specific gravity of 1.0 g/cm³ or less is preferably used and fine hollow center material having a true specific gravity of 0.5 g/cm³ or less is more preferably used.

Examples of the inorganic balloon include a silicic acid-based balloon and a non-silicic acid-based balloon. Examples of the silicic acid-based balloon include shirasu balloon, perlite, glass balloon, silica balloon and fly ash balloon, and examples of the non-siclic acid-based balloon include alumina balloon, zirconia balloon and carbon balloon. Specific examples of the inorganic balloon include WINLITE manufactured by Ijichi Kasei Industry and SANKILITE manufactured by Sanki Engineering Co., Ltd. as the shirasu balloon; CELLSTAR Z-28 manufactured by Sumitomo 3M Ltd., MYCRO BALLOON manufactured by EMERSON&CUMING, CELAMIC GLASSMODULES manufactured by PITTBURGE CORNING and GLASS BUBBLES manufactured by 3M Co. as the glass balloon; Q-CEL manufactured by Asahi Glass Co., Ltd. and E-SPHERES manufactured by TAIHEIYO CEMENT CORPORATION as the silica balloon; CEROSPHERES manufactured by PFAMARKETING and FILLITE manufactured by FILLITE USA as the fly ash balloon; BW manufactured by SHOWA DENKO K.K. as the alumina balloon; HOLLOW ZIRCONIUM SPHEES manufactured by ZIRCOA as the zirconia balloon; and Kureka Spheres manufactured by KUREHA Corporation and Carbosphere manufactured by GENERAL TECHNOLOGIES as the carbon balloon.

Examples of the organic balloon include a balloon made of a thermosetting resin and a balloon made of a thermoplastic resin. Examples of the thermocurable balloon include phenol balloon, epoxy balloon and urea balloon, and examples of the thermoplastic balloon include Saran balloon, polystyrene balloon, polymethacrylate balloon, polyvinyl alcohol balloon and styrene-acrylic balloon. Also, a balloon made of a crosslinked thermoplastic resin can be used. As used herein, the balloon may be a balloon after expansion, or a balloon expanded after mixing with those containing a blowing agent.

Specific examples of the organic based balloon include UCAR and PHENOLIC MICROBATTOONS manufactured by Union Carbide Corporation as the phenol balloon; ECCOSPHERES manufactured by EMERSON&CUMING as the epoxy balloon; ECCOSPHERES VF-O manufactured by EMERSON&CUMING as the urea balloon; SARANMICROSPHERES manufactured by DOW CHEMICAL, EXPANCEL manufactured by AKZO NOBEL and Matsumoto Microsphere manufactured by Matsumoto Yushi-Seiyaku Co., Ltd. as the Saran balloon; DYLITE EXPANDABLE POLYSTYRENE manufactured by ARCO POLYMERS and EXPANDABLE POLYSTYRENE BEADS manufactured by BASF WYANDOTE as the polystyrene balloon; and SX863(P) manufactured by JSR Corporation as the crosslinked styrene-acrylic acid balloon.

These balloons may be used alone, or two or more kinds thereof may be used in combination. It is possible to use balloons having a surface treated with a fatty acid, a fatty acid ester, rosin, lignin rosinate, a silane coupling agent, a titanium coupling agent, an aluminum coupling agent or polypropylene glycol so as to improve dispersibility and workability of the composition. These balloons are used so as to perform weight saving and cost reduction without impairing flexibility and elongation strength among physical properties in case of curing the composition.

The content of the balloon is not particularly limited and is preferably within the range from 0.1 to 50 parts by weight, and more preferably from 0.1 to 30 parts by weight, based on 100 parts by weight of the vinyl-based polymer (A) or the total amount of the polymer having at least one crosslinkable silyl group. When the content is 0.1 part by weight or less, sufficient weight saving effect is not exerted. In contrast, when the content is 50 parts by weight or more, a decrease in tensile strength among mechanical properties in case of curing the composition is recognized. When a specific gravity of the balloon is 0.1 or more, the content is preferably from 3 to 50 parts by weight, and more preferably from 5 to 30 parts by weight.

### (Physical Properties modifier)

To the curable composition of the present invention, physical properties modifiers capable of modifying tensile characteristics of the resultant cured article may be added, if necessary.

Examples of the physical properties modifier include, but are not limited to, alkylalkoxysilanes such as methyltrimethoxysilane, dimethyldimethoxysilane, trimethylmethoxysilane, and n-propyltrimethoxysilane; alkoxysilanes having a functional group, for example, alkylisopropenoxysilane such as dimethyldiisopropenoxysilane, methyltriisopropenoxysilane, or γ-glycidoxypropylmethyldiisopropenoxysilane, γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)aminopropylmethyldimethoxysilane, γ-mercaptopropyltrimethoxysilane, and γ-mercaptopropylmethyldimethoxysilane; silicone varnishes; and polysiloxanes. By using the physical properties modifier, hardness of the composition of the present invention upon curing can be increased, or elongation can be increased by decreasing hardness. These physical properties modifies may be used alone, or two or more kinds thereof may be used in combination.

The physical properties modifier is not particularly limited and can be used in the amount within the range from 0.1 to 80 parts by weight, and more preferably from 0.1 to 50 parts by weight, based on 100 parts by weight of the vinyl-based polymer (A) or the total amount of the polymer having at least one crosslinkable silyl group. When the amount of the physical properties modifier is less than 0.1 part by weight, sufficient weight saving effect is not exerted. In contrast, when the amount is more than 80 parts by weight, a decrease in tensile strength among mechanical properties upon curing of the composition may be recognized.

### (Regarding Silanol-Containing Compounds)

In the curable composition of the present invention, a silanol-containing compound may be added. As used herein, the silanol-containing compound means a compound having one silanol group in the molecule and/or a compound capable of reacting with moisture to produce a compound having one silanol group in the molecule. Only one compound may be used, or both compounds may be simultaneously used.

Examples of the compound having one silanol group in the molecule as one of components used in the present invention include, but are not limited to, the following compounds: compounds which can be represented by (R")₃SiOH (wherein R" represents the same or different substituted or non-substituted alkyl or aryl group) such as (CH₃)₃SiOH, (CH₃CH₂)₃SiOH, (CH₃CH₂CH₂)₃SiOH, (n-Bu)₃SiOH, (sec-Bu)₃SiOH, (t-Bu)₃SiOH, (t-Bu)Si(CH₃)₂OH, (C₅H₁₁)₃SiOH, (C₆H₁₃)₃SiOH, (C₆H₅)₃SiOH, (C₆H₅)₂Si(CH₃)OH, (C₆H₅)₂Si (CH₃)₂OH, (C₆H₅)₂Si(C₂H₅)₂OH, (C₆H₅)₂Si(C₂H₅)₂OH, C₆H₅CH₂Si(C₂H₅)₂OH, and C₁₀H₇Si(CH₃)₂OH (wherein C₆H₅ represents a phenyl group, and C₁₀H₇ represents a naphthyl group);

cyclic polysiloxane compounds having a silanol group such as:

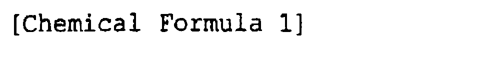

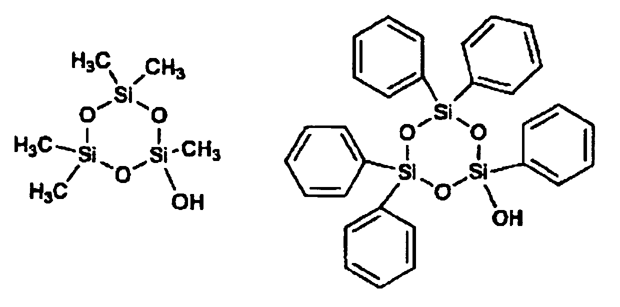

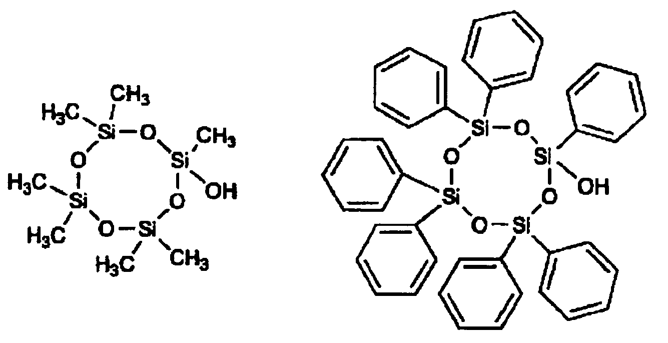

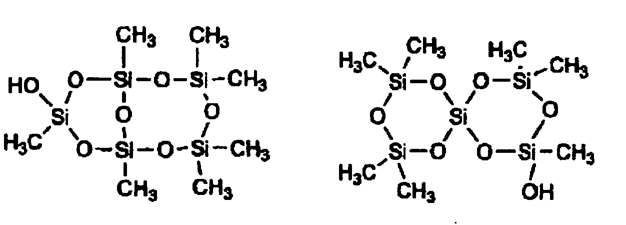

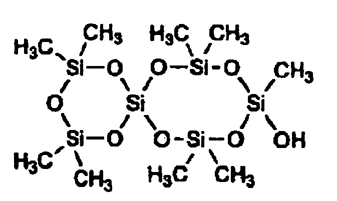

chain polysiloxane compounds having a silanol group such as:

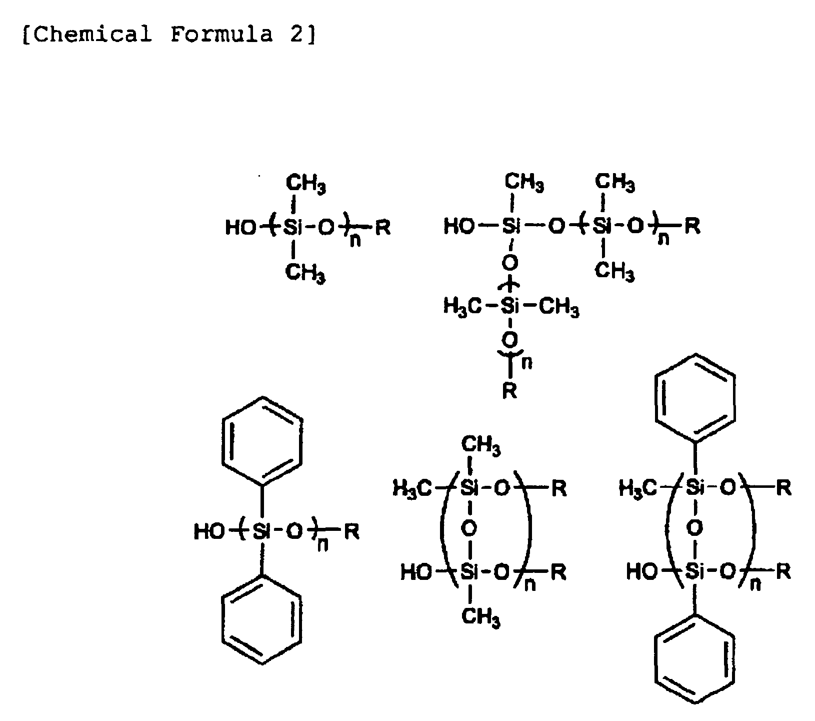

wherein R is the same as R²⁶ described hereinafter, and n represents a positive integer;

compounds in which a silanol group is linked to a terminus of a polymer including a backbone composed of silicon and carbon such as:

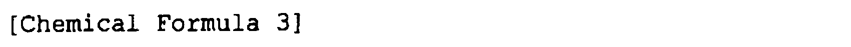

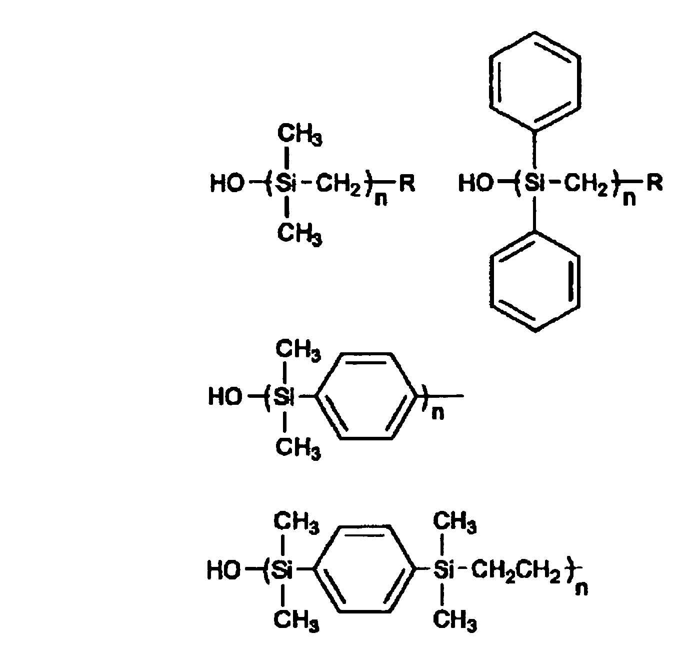

wherein R is the same as R²⁶ described hereinafter, and n represents a positive integer;

compounds in which a silanol group is linked to a terminus of a polysilane backbone such as:

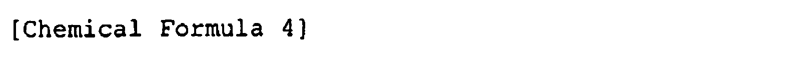

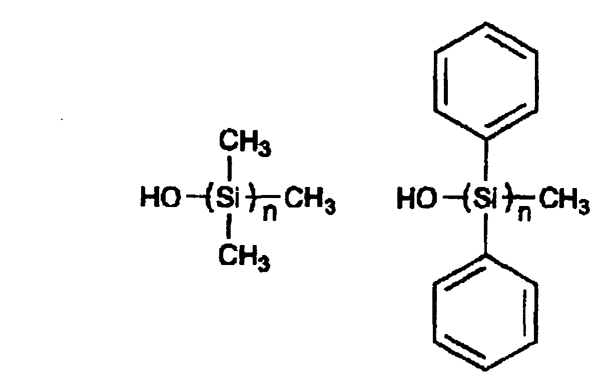

wherein n represents a positive integer; and

compounds in which a silanol group is linked to a terminus of a polymer including a backbone composed of silicon, carbon and oxygen such as:

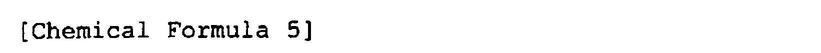

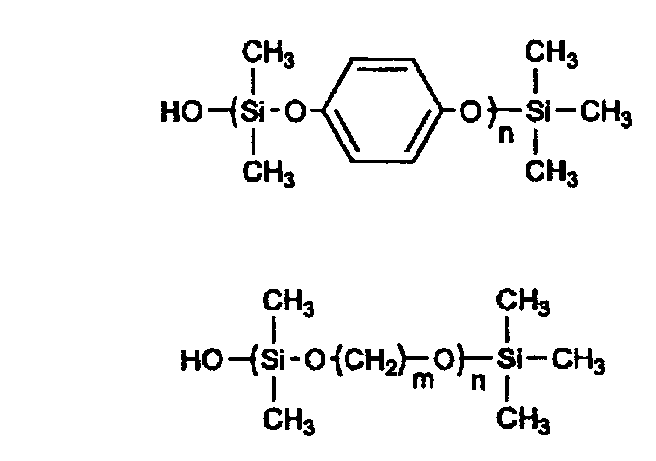

wherein m represents a positive integer, and n represents a positive integer. Among them, a compound represented by the following general formula (29) is preferred.

(R²⁶)₃SiOH (29)

wherein R²⁶ represents a monovalent hydrocarbon group having 1 to 20 carbon atoms, and a plurality of R²⁶(s) may be the same or different.
R²⁶ is preferably a methyl group, an ethyl group, a vinyl group, a t-butyl group or a phenyl group, and more preferably a methyl group in view of easy availability and effect.

It is estimated that the compound having one silanol group in the molecule decreases the number of crosslinking points and impart flexibility to the cured article by reacting with a crosslinkable silyl group of the vinyl-based polymer (A) or a crosslinkable silyl group of the polyether-based polymer (C), or a siloxane bond formed by crosslinking.
The compound capable of producing a compound having one silanol group in the molecule by reacting with moisture as one of components of the present invention is not particularly limited and a compound having one silanol group in the molecule (hydrolysate) produced by reacting with moisture is preferably a compound represented by the general formula (29). The compound includes, in addition to a compound represented by the following (30), the following compounds.

It is possible to preferably use N,O-bis(trimethylsilyl)acetoamide, N-(trimethylsilyl)acetoamide, bis(trimethylsilyl)trifluoroacetoamide, N-methyl-N-trimethylsilyltrifluoroacetoamide, bistrimethylsilyl urea, N-(t-butyldimethylsilyl)N-methyltrifluoroacetoamide, (N,N-dimethylamino)trimethylsilane, (N,N-diethylamino)trimethylsilane, hexamethyldisilazane, 1,1,3,3-tetramethyldisilazane, N-(trimethylsilyl)imidazole, trimethylsilyltrifluoromethane sulfonate, trimethylsilylphenoxide, a trimethylsilylated compound of n-octanol, a trimethylsilylated compound of 2-ethylhexanol, a tris(trimethylsilylated) compound of glycerin, a tris(trimethylsilylated) compound of trimethylolpropane, a tris(trimethylsilylated) compound of pentaerythritol, a tetra(trimethylsilylated) compound of pentaerythritol, (CH₃)₃SiNHSi(CH₃)₃, and (CH₃)₃SiNSi(CH₃)₂·

It is preferred to use the followings:

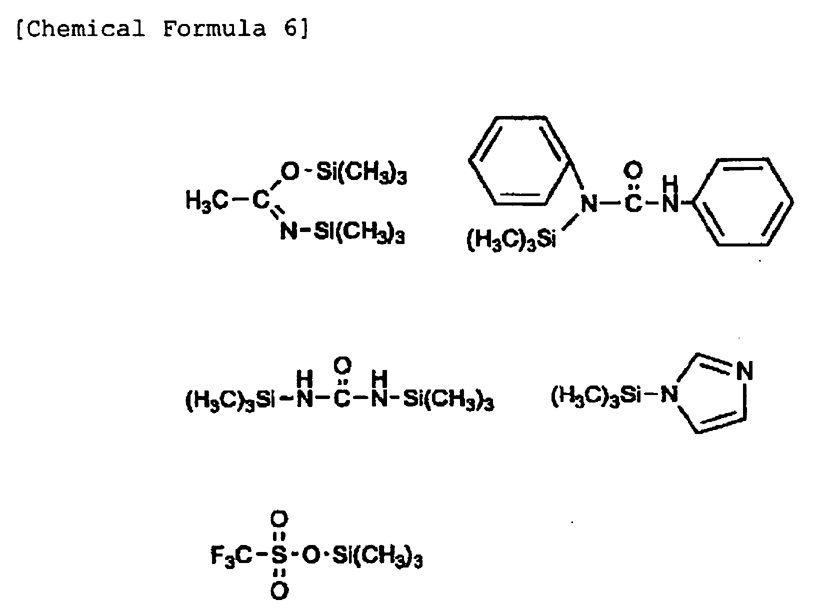

and (CH₃)₃SiNHSi(CH₃)is particularly preferred in view of the amount of the silanol group contained in a hydrolysate.

Furthermore, the compound capable of reacting with moisture to produce a compound having one silanol group in the molecule as one of components of the present invention is not specifically limited and a compound represented by the following general formula (30) is preferred in addition to the compound.

((R²⁶)₃Sio)_{q}R²⁷ (30)

wherein R²⁶ is the same as defined above, q represents a positive integer, and R²⁷ represents a group in which a portion or all of active hydrogens are removed from an active hydrogen-containing compound.
R²⁶ is preferably a methyl group, an ethyl group, a vinyl group, a t-butyl group, or a phenyl group, and more preferably a methyl group.
(R²⁶)₃Si group is particularly preferably a trimethylsilyl group in which all three R²⁶(s) are methyl groups. q is preferably from 1 to 5.

Examples of the active hydrogen-containing compound as a derivation of R²⁷ include, but are not limited to, alcohols such as methanol, ethanol, n-butanol, i-butanol, t-butanol, n-octanol, 2-ethylhexanol, benzyl alcohol, ethylene glycol, diethylene glycol, polyethylene glycol, propylene glycol, dipropylene glycol, polypropylene glycol, propanediol, tetramethylene glycol, polytetramethylene glycol, glycerin, trimethylolpropane, and pentaerythritol; phenols such as phenol, cresol, bisphenol A, and hydroquinone; carboxylic acids such as formic acid, acetic acid, propionic acid, lauric acid, palmitic acid, stearic acid, behenic acid, acrylic acid, methacrylic acid, oleic acid, linoleic acid, linolenic acid, sorbic acid, oxalic acid, malonic acid, succinic acid, adipic acid, maleic acid, benzoic acid, phthalic acid, terephthalic acid, and trimellitic acid; ammonia; amines such as methylamine, dimethylamine, ethylamine, diethylamine, n-butylamine, and imidazole; acid amides such as acetoamide and benzamide; ureas such as urea and N, N' -diphenylurea; and ketones such as acetone, acetylacetone, and 2,4-heptadion.

The compound capable of reacting with moisture to produce a compound having one silanol group in the molecule, which is represented by the general formula (30), can be obtained by reacting the above active hydrogen-containing compound with a compound having a (R²⁶)₃Si group and a group such as a halogen group capable of reacting with active hydrogen, which is referred to as a silylating agent such as trimethylsilyl chloride or dimethyl (t-butyl) silyl chloride, but is not limited thereto (provided that R²⁶ is the same as defined above).

Specific examples of the compound represented by the general formula (30) include, but are not limited to, allyloxytrimethylsilane, N,O-bis(trimethylsilyl)acetoamide, N-(trimethylsilyl)acetoamide, bis(trimethylsilyl)trifluoroacetoamide, N-methyl-N-trimethylsilyltrifluoroacetoamide, bistrimethylsilylurea, N-(t-butyldimethylsilyl)N-methyltrifluoroacetoamide, (N,N-dimethylamino)trimethylsilane, (N,N-diethylamino)trimethylsilane, hexamethyldisilazane, 1,1,3,3-tetramethyl disilazane, N-(trimethylsilyl)imidazole, trimethylsilyltrifluoromethane sulfonate, trimethylsilyl phenoxide, a trimethylsilyllated compound of n-octanol, a trimethylsilylated compound of 2-ethylhexanol, a tris(trimethylsilylated) compound of glycerin, a tris(trimethylsilylated) compound of trimethylolpropane, a tris(trimethylsilylated) compound of pentaerythritol, and a tetra(trimethylsilylated) compound of pentaerythritol. These compounds may be used alone, or two or more kinds thereof may be used in combination.

It is also possible to use a compound represented by the general formula ((R²⁸)₃SiO(R²⁹O)ₛ)ₜD, such as CH₃O(CH₂CH(CH₃)(O)₅Si((CH₃)₃, CH₂=CHCH₂(CH₂CH(CH₃)(O)₅Si(CH₃)₃, (CH₃)₃SiO(CH₂CH(CH₃)O)₅Si(CH₃)₃, and (CH₃)₃SiO(CH₂CH(CH₃)O)₇Si(CH₃)₃:
(wherein R²⁸ represents a same or different substituted or non-substituted monovalent hydrocarbon group or a hydrogen atom, R²⁹ represents a divalent hydrocarbon group having 1 to 8 carbon atoms, s and t represent a positive integer, t represents 1 to 6, s x t represents 5 or more, and D represents a mono- to hexavalent organic group.) These compounds may be used alone, or two or more kinds thereof may be used in combination.

Among the compound capable of reacting with moisture to produce a compound having one silanol group in the molecule, an active hydrogen compound produced after hydrolysis may be preferably phenols, acid amides or alcohols, and more preferably phenols and alcohols in which an active hydrogen compound is a hydroxyl group since an adverse influence is not exerted on storage stability and weatherability.

Among the above compounds, N,O-bis(trimethylsilyl)acetoamide, N-(trimethylsilyl)acetoamide, trimethylsilyl phenoxide, a trimethylsilylated compound of n-octanol, trimethylsilylated compound of 2-ethylhexanol, a tris(trimethylsilylated) compound of glycerin, a tris(trimethylsilylated) compound of trimethylolpropane, a tris(trimethylsilylated) compound of pentaerythritol, and a tetra(trimethylsilylated) compound of pentaerythritol are preferred.

The compound capable of reacting with moisture to produce a compound having one silanol group in the molecule is reacted with moisture upon storage or curing or after curing to produce a compound having one silanol group in the molecule. It is estimated that the compound having one silanol group in the molecule thus produced is reacted with a crosslinkable silyl group of the vinyl-based polymer (I) or a siloxane bond produced by crosslinking thereby decreasing the number of crosslinking points and imparting flexibility to the cured article.

The amount of the silanol-containing compound can be appropriately adjusted according to the expected physical properties of the cured article. The silanol-containing compound can be added in the amount of 0.1 to 50 parts by weight, preferably 0.3 to 20 parts by weight, and more preferably 0.5 to 10 parts by weight, based on 100 parts by weight of the vinyl-based polymer (A) or the total amount of the polymer having at least one crosslinkable silyl group. When the amount is less than 0.1 part by weight, the addition effect is not exerted. In contrast, when the amount is more than 50 parts by weight, the strength or gel fraction of the cured article may decrease because of insufficient crosslinking.

Timing of the addition of the silanol-containing compound to the vinyl-based polymer (A) or the polymer having at least one crosslinkable silyl group is not specifically limited. The silanol-containing compound may be added upon production of either the vinyl-based polymer (A) or the polymer having at least one crosslinkable silyl group, or may added on preparation of a curable composition.

### (Thixotropic Agent (Antisagging Agent))

To the curable composition of the present invention, thixotropic agents (antisagging agents) may be optionally added so as to prevent sagging and to improve workability.

Examples of the antisagging agent include, but are not limited to, polyamide wax, hydrogenated castor oil derivatives; and metal soaps such as calcium stearate, aluminum stearate, barium stearate. These thixotropic agents (antisagging agents) may be used alone, or two or more kinds thereof may be used in combination.

The thixotropic agent can be added in the amount of 0.1 to 50 parts by weight, and preferably from 0.2 to 25 parts by weight, based on 100 parts by weight of the vinyl-based polymer (A) or the total amount of the polymer having at least one crosslinkable silyl group. When the amount is less than 0.1 part by weight, sufficient thixotropy imparting effect is not exerted. In contrast, when the amount is more than 50 parts by weight, the viscosity of the composition increases and storage stability of the composition deteriorates.

### (Photocurable Substance)

To the curable composition of the present invention, photocurable substances may be added, if necessary. The photocurable substance is a substance in which a chemical change occurs in the molecular structure within a short time through an action of light thereby causing a change in physical properties. The addition of the photocurable substance can decrease tack (also referred to a residual tack) of the surface of a cured article obtained by curing the curable composition. This photocurable substance is a typical photocurable substance which is curable of irradiation with light and is typically a substance which is curable by standing at the position irradiated with light in the room (in the vicinity of the window) at room temperature for one day. As this kind of the compound, various compounds such as organic monomers, oligomers, resins, or compositions containing them are known and the kind thereof is not specifically limited, and examples thereof include an unsaturated acrylic compound, vinyl polycinnamates and an azidated resin.

Specific examples of the unsaturated acrylic compound include (meth) acrylate esters of low molecular weight alcohols, such as ethylene glycol, glycerin, trimethylolpropane, pentaerythritol, and neopentyl alcohol; (meth) acrylate esters of alcohols obtained by modifying bisphenol A, an acid such as isocyanuric acid or the low molecular weight alcohol with ethylene oxide or propylene oxide; (meth)acrylate esters such as polyetherpolyol including polyether as a backbone, having a hydroxyl group at a terminus, polymerpolyol obtained by radical polymerization of a vinyl-based monomer in a polyol including a polyether as a backbone, polyesterpolyol including polyester as a backbone, having a hydroxyl group at a terminus, and polyol including a vinyl-based or (meth) acrylic polymer as a backbone, having a hydroxyl group in the backbone; epoxy acrylate-based oligomers obtained by reacting a bisphenol A type or novolak type epoxy resin with (meth) acrylic acid; and urethane acrylate-based oligomers having an urethane bond and a (meth)acryl group in the molecular chain, which is obtained by reacting polyol, polyisocyanate and a hydroxyl group-containing (meth)acrylate.

Vinyl polycinnamates are photosensitive resins having a cinnamoyl group as a photosensitive group and examples thereof include various vinyl polycinnamate-based derivatives, in addition to those obtained by esterifying polyvinyl alcohol with cinnamic acid.

The azidated resin is known as a photosensitive resin having an azide group as a photosensitive group and is usually described in detail in a rubber sensitizing solution prepared by adding an azide compound as a photosensitizer or "Photosensitive Resin" (published on March 17, 1972, published by Japan Printer, pp.93-, 106-, 117-), and the azidated resins or a mixture thereof can be used after optionally adding a sensitizer.

Among the photocurable substance, an unsaturated acrylic compound is preferred because it is easy to handle.

The photocurable substance is preferably added in the amount of 0.01 to 30 parts by weight based on 100 parts by weight of the vinyl-based polymer (A) or the total amount of the polymer having at least one crosslinkable silyl group. When the amount is less than 0.01 part by weight, sufficient effect is not exerted. In contrast, when the amount is more than 30 parts by weight, an adverse influence may be exerted on physical properties. When a promoter, for example, a sensitizer such as ketones or a nitro compound, or amines are added, the effect may be enhanced.

### <Air Oxidation Curable Substance)

To the curable composition of the present invention, air oxidation curable substances may be added, if necessary. The air oxidation curable substance is a compound having an unsaturated group capable of crosslinking through oxygen in the air. By adding the air oxidation curable substance, tack (also referred to as residual tack) of the surface of the cured article obtained by curing the curable composition can be decreased. The air oxidation curable substance in the present invention is a substance which can be cured by contacting with the air. More specifically, it has a property capable of being cured by reacting with oxygen in the air. A typical air oxidation curable substance can be cured by standing in the air in the room for one day.

Specific examples of the air oxidation curable substance include drying oils such as tung oil and linseed oil; various alkyd resins obtained by modifying these drying oils; an acrylic polymer, an epoxy-based resin and a silicone resin modified by drying oil; and polymers and copolymers of 1,2-polybutadiene, 1,4-polybutadiene and C5-C8 diene, and various modified products of polymers and copolymers (maleinated modified products, boil oil modified products, etc.). Among these, tung oil, liquid of the diene-based polymer (liquid diene-based polymer) and modified products thereof are preferred.

Specific examples of the liquid diene-based polymer include liquid polymers obtained by polymerization or copolymerization of diene-based compounds such as butadiene, chloroprene, isoprene and 1, 3-pentadiene; polymers such as NBR and SBR obtained by copolymerzing a monomer such as acrylonitrile or styrene, which is copolymerizable with these diene-based compounds, so as to mainly obtain the diene-based compound; and various modified products (maleinated modified products, boil oil modified products, etc.). These liquid diene-based polymers may be used alone, or two or more kinds thereof may be used in combination. Among these liquid diene-based compounds, liquid polybutadiene is preferred.

These air oxidation curable substances may be used alone, or two or more kinds thereof may be used in combination. Also, when the air oxidation curable substance is used in combination with catalysts and metal dryers capable of promoting the oxidation curing reaction, the effect may be enhanced. Examples of these catalysts and metal dryers include metal salts such as cobalt naphthate, lead naphthate, zirconium naphthate, cobalt octylate, and zirconium octylate, and an amine compound.

The air oxidation curable substance is preferably added in the amount of 0.01 to 30 parts by weight based on 100 parts by weight of the vinyl-based polymer (A) or the total amount of the polymer having at least one crosslinkable silyl group. When the amount is less than 0.01 part by weight, sufficient effect is not exerted. In contrast, when the amount is more than 30 parts by weight, an adverse influence may be exerted on physical properties.

### <Antioxidant, photostabilizer>

In the curable composition of the present invention, antioxidants or photostabilizers may be used, if necessary. As antioxidants and photostabilizers, various antioxidants and photostabilizers are known. Examples thereof include, but are not limited to, those described in "Antioxidant Handbook" published by TAISEISHA LTD. and "Deterioration and Stabilization of Polymer Materials" (pp.235-242) published by CMC.

Examples of the antioxidant include, but are not limited to, thioether-based antioxidants such as Adekastub PEP-36 and Adekastub AO-23 (all of which are manufactured by ADEKA CORPORATION); phosphorous-based antioxidants such as Irgafos 38, Irgafos 168 and Irgafos P-EPQ (all of which are manufactured by Ciba Specialty Chemicals Inc.); and hindered phenol-based antioxidants. Of these antioxidants, hindered phenol-based compounds described above are preferred.

Specific examples of the hindered phenol-based compound include 2,6-di-t-butyl-4-methylphenol,
2,6-di-t-butyl-4-ethylphenol, mono- (or di- or tri-)(α methylbenzyl)phenol,
2,2¹-methylene-bis(4-ethyl-6-t-butylphenol),
2,2¹-methylene-bis(4-methyl-6-t-butylphenol),
4,4'-butylidene-bis(3-methyl-6-t-butylphenol),
4,4'-thio-bis(3-methyl-6-t-butylphenol),
2,5-di-t-butylhydroquinone, 2,5-di-t-amylhydroquinone, triethyleneglycol-bis-[3-(3-t-butyl-5-methyl-4-hydroxypheny 1)propionate,
1,6-hexanediol-bis[3-(3,5-di-t-butyl-4-hydroxyphenyl)propio nate,
2,4-bis-(n-octylthio)-6-(4-hydroxy-3,5-di-t-butylanilino)-1-,3,5-triazine,
pentaerythrithyl-tetrakis[3-(3,5-di-t-butyl-4-hydroxyphenyl )propionate],
2,2-thio-diethylenebis[3-(3,5-di-t-butyl-4-hydroxyphenyl)pr opionate,
octadecyl-3-(3,5-di-t-butyl-4-hydroxyphenyl)propionate, N,N'-hexamethylene-bis(3,5-di-t-butyl-4-hydroxy-hydrocynnam ide),
3,5-di-t-butyl-4-hydroxy-benzylphosphonate-diethylester,
1,3,5-trimethyl-2,4,6-tris(3,5-di-t-butyl-4-hydroxybenzyl)b enzene, bis(3,5-di-t-butyl-4-hydroxybenzylphosphonic acid ethyl)calcium,
tris-(3,5-di-t-butyl-4-hydroxybenzyl)isocyanurate,
2,4-bis[(octylthio)methyl]o-cresol,
N,N'-bis[3-(3,5-di-t-butyl-4-hydroxyphenyl)propionyl]hydraz ine, tris(2,4-di-t-butylphenyl)phosphite,
2-(5-methyl-2-hydroxyphenyl)benzotriazole,
2-[2-hydroxy-3,5-bis(α,α-dimethylbenzyl)phenyl]-2H-benzotri azole, 2-(3,5-di-t-butyl-2-hydroxyphenyl)benzotriazole,
2-(3-t-butyl-5-methyl-2-hydroxyphenyl)-5-chlorobenzotriazol e, 2-(3,5-di-t-butyl-2-hydroxyphenyl)-5-chlorobenzotriazole, 2-(3,5-di-t-amyl-2-hydroxyphenyl)benzotriazole,
2-(2'-hydroxy-5'-t-octylphenyl)-benzotriazole, a condensate with
methyl-3-[3-t-butyl-5-(2H-benzotriazol-2-yl)-4-hydroxypheny 1]propionate-polyethylene glycol (molecular weight: about 300), a hydroxyphenylbenzotriazole derivative,
2-(3,5-di-t-butyl-4-hydroxybenzyl)-2-n-butylmalonic acid bis(1,2,2,6,6-pentamethyl-4-piperidyl), and
2,4-di-t-butylphenyl-3,5-di-t-butyl-4-hydroxybenzoate.

Examples of the trade name thereof include, but are not limited to, NOCRAC 200, NOCRAC M-17, NOCRAC SP, NOCRAC SP-N, NOCRAC NS-5, NOCRAC NS-6, NOCRAC NS-30, NOCRAC 300, NOCRAC NS-7, and NOCRAC DAH (all of which are manufactured by OUCHI SHINKO CHEMICAL INDUSTRIAL CO., LTD.); Adekastub AO-30, Adekastub AO-40, Adekastub AO-50, Adekastub AO-60, Adekastub AO-616, Adekastub AO-635, Adekastub AO-658, Adekastub AO-80, Adekastub AO-15, Adekastub AO-18, Adekastub 328, and Adekastub AO-37 (all of which are manufactured by ADEKA CORPORATION); IRGANOX-245, IRGANOX-259, IRGANOX-565, IRGANOX-1010, IRGANOX-1024, IRGANOX-1035, IRGANOX-1076, IRGANOX-1081, IRGANOX-1098, IRGANOX-1222, IRGANOX-1330, and IRGANOX-1425WL (all of which are manufactured by Ciba Specialty Chemicals Inc.); and Sumilizer GM and Sumilizer GA-80 (all of which are manufactured by Sumitomo Chemical Co., Ltd.).

Examples of the photostabilizer include ultraviolet absorbers, for example, benzotriazole-based compounds such as Tinuvin P, Tinuvin 234, Tinuvin 320, Tinuvin 326, Tinuvin 327, Tinuvin 329, and Tinuvin 213 (all of which are manufactured by Ciba Specialty Chemicals Inc.), triazine-based compounds such as Tinuvin 1577, benzophenone-based compounds such as CHIMASSORB81, and benzoate-based compounds such as Tinuvin 120 (manufactured by Ciba Specialty Chemicals Inc.); and hindered amine-based compounds.

Of these photostabilizers, hindered amine-based compounds are more preferred. Specific examples of the hindered amine-based compound include, but are not limited to, dimethyl succinate-1-(2-hydroxyethyl)-4-hydroxy-2,2,6,6-tetramethylp iperidine polycondensate, poly[{6-(1,1,3,3-tetramethylbutyl)amino-1,3,5-triazin-2,4-d iyl}]{(2,2,6,6-tetramethyl-4-piperidyl)imino}], N,N'-bis(3-aminopropyl)ethylenediamine-2,4-bis[N-butyl-N-(1 ,2,2,6,6-pentamethyl-4-piperidyl)amino]-6-chloro-1,3,5-tria zinecondensate, bis(2,2,6,6-tetramethyl-4-piperidyl)sebacate, and succinic acid bis(2,2,6,6-tetramethyl-4-piperidinyl)ester.

Examples of the trade name thereof include Tinuvin 622LD, Tinuvin 144, CHIMASSORB944LD, and CHIMASSORB119FL (all of which are manufactured by Ciba Specialty Chemicals Inc.); Adekastub LA-52, Adekastub LA-57, Adekastub LA-62, Adekastub LA-67, Adekastub LA-63, Adekastub LA-68, Adekastub LA-82, and Adekastub LA-87 (all of which are manufactured by ADEKA CORPORATION); and Sanol LS-770, Sanol LS-765, Sanol LS-292, Sanol LS-2626, Sanol LS-1114, Sanol LS-744, and Sanol LS-440 (all of which are manufactured by Sankyo Co.).

Antioxidants may be used in combination with photostabilizers and it is particularly preferred to use antioxidants in combination with photostabilizers since the effect may be further exerted thereby improving heat resistance and weatherability. Tinuvin C353 and Tinuvin B75 (manufactured by Ciba Specialty Chemicals Inc.) prepared by preliminarily mixing antioxidant with photostabilizers may also be used.

Ultraviolet absorbers are sometimes used in combination with an amine-based compound (HALS) so as to improve weatherability. Since this combination may exert more effect, these may be used in combination and there is no restriction, and these are preferably used in combination.

Antioxidants or photostabilizers are not specifically limited and it is more preferred to use those having a high molecular weight since the effect of improving heat resistance of the present invention is exerted for a long period.

The amount of the antioxidant or photostabilizer is preferably within the range from 0.1 to 20 parts by weight based on 100 parts by weight of the vinyl-based polymer (A) or the total amount of the polymer having at least one crosslinkable silyl group. When the amount is less than 0.1 part by weight, sufficient effect of improving heat resistance is not exerted. In contrast, when the amount is more than 20 parts by weight, more excellent effect is not exerted and it is economically disadvantageous.

### Other Additives

To the curable composition of the present invention, various additives may be optionally added for the purpose of adjusting various physical properties of the curable composition or the cured article. Examples of the additives include flame retardants, curability modifiers, antioxidants, radical inhibitors, metal deactivators, antiozonants, phosphorous-based peroxide decomposers, lubricants, pigments, and blowing agents. These various additives may be used alone, or two or more kinds thereof may be used in combination.

Specific examples of these additives are described, for example, in specifications of Japanese Examined Patent Publication (Kokoku) No. 4-69659, Japanese Examined Patent Publication (Kokoku) No. 7-108928, Japanese Unexamined Patent Publication (Kokai) No. 63-254149, and Japanese Unexamined Patent Publication (Kokai) No. 64-22904.

### (Preparation of Curable Composition)

The curable composition of the present invention may be prepared as a one-component type curable composition capable of curing with moisture in the air after execution, which is prepared by preliminarily mixing all components and storing the mixture in a sealed state, or may be prepared as a two-component type curable composition in which components such as a curing agent, a filler, a plasticizer and water are preliminarily mixed to obtain a mixture as a curing agent and the resultant mixture is mixed with a polymer composition. In the case of the two-component type curable composition, a colorant can be added when two components are mixed and, for example, it becomes possible to obtain products with various colors using limited stocks when a sealing material having a color corresponding to a siding board is provided. Thus, it becomes possible to cope with multi-coloration required from the market and the two-pack type curable composition is suited for low floor height buildings. When a colorant prepared by mixing a pigment and a plasticizer and, if necessary, a filler and forming the paste into a paste is used, it is easy to work. The curing rate can be finely adjusted at workings by adding a retarder upon mixing of two components.

### <Cured Article>

### (Applications)

The curable composition of the present invention can be used in various applications, for example, elastic sealing materials for buildings, sealing materials for multiple glass, adhesives, elastic adhesives, coating materials, gaskets, casting materials, various molding materials, artificial marbles, rust-proofing/water-proofing sealing materials of glass end faces (cut portions) of wire glass and laminated glass, vibration-proof/vibration damping/soundproofing/quake-absorbing materials used in automobiles, ships and household appliances, and liquid sealing agents used in automobile components, electrical machinery components and various mechanical components. The curable composition is particularly suited for use as adhesives, sealing materials and liquid gaskets.

### EXAMPLES

The present invention will be described by way of examples, but is not limited to the following examples.

In the following synthesis examples, "number average molecular weight" and molecular weight distribution (a ratio of a weight average molecular weight to a number average molecular weight)" were calculated by a standard polystyrene equivalent method using gel permeation chromatography (GPC). A column packed with a polystyrene crosslinked gel (Shodex GPC K-804, manufactured by SHOWA DENKO K.K.) was used as a GPC column and chloroform was used as a GPC solvent.
Viscosity of polymers prepared in synthesis examples was measured at 2 rpm using a viscometer Model BS manufactured by TOKIMEC INC.

### (Synthesis Example 1)

### Synthesis of poly(n-butyl acrylate) having halogen at end

In a 50 ml flask, 0.63 g (4.4 mmol) of cuprous bromide, 0.76 g (4.4 mmol) of pentamethyldiethylenetriamine, 5 ml of acetonitrile, 1.6 g (4.4 mmol) of diethyl 2,5-dibromoadipate and 44.7 g (349 mmol) of n-butyl acrylate were charged and, after freeze deaeration was carried out, the mixture was reacted under a nitrogen atmosphere at 70°C for 7 hours. The reaction product was refined by removing a copper catalyst through a column made of active alumina to obtain a polymer having a Br group at a terminus. The resultant polymer had a number average molecular weight of 10,700 and a molecular weight distribution of 1.15.

### Synthesis of poly(n-butyl acrylate) having alkenyl group at terminus

Under a nitrogen atmosphere, 35 g of the poly(n-butyl acrylate) having a Br group at a terminus obtained above, 2.2 g (16.1 mmol) of potassium pentenoate and 35 mL of DMAc were charged in a 200 ml flask and the mixture was reacted at 70°C for 4 hours. The unreacted potassium pentenoate and potassium bromide produced in the reaction mixture were removed by refining through extraction with water to obtain a polymer having an alkenyl group at a terminus. The resultant polymer had a number average molecular weight of 11, 300 and a molecular weight distribution of 1.12. The number of alkenyl groups per one molecule of the polymer obtained by ¹H-NMR analysis was 1.82.

### Synthesis of poly (n-butyl acrylate) having crosslinkable silyl group at terminus

In a 200 ml pressure-resistant reaction tube, 15 g of the polymer having an alkenyl group obtained above, 1.8 mL (14.5 mmol) of methyldimethoxysilane, 0.26 mL (2.4 mmol) of methyl orthoformate and 10⁻⁴ mmol of platinum bis(divinyltetramethyldisiloxane) were charged and the mixture was reacted at 100°C for 4 hours to obtain a polymer having a crosslinkable silyl group at a terminus. The resultant polymer had viscosity of 44 Pa·s, a number average molecular weight of 1,1900 and a molecular weight distribution of 1.12. The number of crosslinkable silyl groups per one molecule of the polymer obtained by ¹H-NMR analysis was 1.46.

### (Synthesis Example 2)

### Synthesis of hydroxyl group-terminated polypropylene oxide

In an autoclave, 0.04 g of a zinc hexacyanocobaltate-glyme complex, a THF solution of 2.0 g of dipropylene glycol and 9.6 g of propylene oxide were charged and the mixture was reacted under a nitrogen atmosphere at 76°C. Then, 145.2 g of propylene oxide was added to the reaction system. The resultant reaction product was refined by recovering the unreacted monomer and the solvent to obtain 150 g of an oily product. As a result of GPC analysis, the resultant product showed a single peak and had a molecular weight distribution (Mw/Mn) of 1.14. The hydroxyl value was 11.8 mgKOH/g.

### Synthesis of unsaturated group-terminated polypropylene oxide

To the 120 g of the hydroxyl group-terminated polypropylene oxide obtained above, 5.8 g (30.2 mmol) of a methanol solution (28% by weight) of sodium methoxide was added and the mixture was reacted in an autoclave at 130°C for one hour, followed by vaporization under reduced pressure. After returning under a nitrogen atmosphere, 2.8 g (36.2 mmol) of allyl chloride was added and the mixture was reacted for 2 hours.

The reaction mixture was dissolved in hexane and subjected to an adsorption treatment with aluminum silicate, and then hexane was distilled off under reduced pressure to obtain an unsaturated group-terminated polypropylene oxide.

### Synthesis of crosslinkable silyl group-terminated

### Polypropylene Oxide

120 g of the unsaturated group-terminated polypropylene oxide obtained by the above synthesis was charged in a reaction vessel made of pressure-resistant glass and 0.02 g of an isopropanol solution of chloroplatinic acid (prepared by dissolving 25 g of H₂PtC1₆·6H₂O in 500 g of isopropanol) was added, followed by stirring for 30 minutes. 2.1 g (20.2 mmol) of methyldimethoxysilane was added dropwise and the mixture was reacted at 90°C for 2 hours. The volatile matter was removed by evacuation to obtain a crosslinkable silyl group-terminated polypropylene oxide. This polymer had viscosity of 6 Pa·s, a number average molecular weight of 17,300 and a molecular weight distribution of 1.14.

### (Example 1)

100 parts by weight of the polymer obtained in Synthesis Example 1 was mixed with 1 part by weight of a photopolymerization initiator (manufactured by Ciba Specialty Chemicals Inc. under the trade name of IRGACURE 651), 50 parts by weight of diisodecyl phthalate (manufactured by New Japan Chemical Co., Ltd. under the trade name of SANSOCIZER DIDP) and 20 parts by weight of an epoxy-based plasticizer (manufactured by New Japan Chemical Co., Ltd. under the trade name of SANSOCIZER E-PS) as plasticizers), 120 parts by weight of surface-treated colloidal calcium carbonate (manufactured by Shiraishi Kogyo Co., Ltd. under the trade name of HAKUENKA CCR), 20 parts by weight of ground calcium carbonate (manufactured by Shiraishi Calcium Co., Ltd under the trade name of Whitone SB), 2 parts by weight of a thixotropic agent (manufactured by Kusumoto Chemicals, Ltd. under the trade name of DISPARON305), 1 part by weight of a benzotriazole-based ultraviolet absorber (manufactured by Ciba Specialty Chemicals Inc. under the trade name of Tinuvin 327) and 1 part by weight of a hindered amine-based photostabilizer (manufactured by SANKYO Co. under the trade name of Sanol LS770) and the mixture was sufficiently kneaded, followed by dispersion through passing through a three paint roll three times. To the resultant curable composition, OT/LA: tin octylate (U-28, manufactured by NITTO CHEMICAL INDUSTRY Co., Ltd.) /laurylamine (= 3 parts by weight/0. 75 parts by weight) and 10 parts by weight of titanium oxide (manufactured by ISHIHARA SANGYO KAISHA, LTD. under the trade name of TIPAQUE R-820) were added, followed by mixing with hands to obtain a two-pack type curable composition. Physical properties of the resultant curable composition were evaluated by the following procedures.

### (Storage Stability)

A curable composition before curing was filled in 100 cc DESPOCUP so as not to trap air. Viscosity at 10 rpm of the composition immediately after preparation and the composition after standing in an oven at 50°C for 4 weeks was measured using a viscometer Model BS manufactured by TOKIMEC INC. A thickening ratio (%) of the viscosity of the composition immediately after preparation to that of the composition after standing at 50°C for 4 weeks is shown in Table 1.

### (Time required to form Film of Curable Composition on Surface at 23°C)

A curable composition was spread under the conditions of 23°C and 55%RH in a thickness of about 3 mm. While slightly touching the surface of the curable composition using a microspatula, sometimes, the time until the composition does not adhere to the microspatula was measured. The results are shown in Table 1.

### (Residual Tack)

Using a curable composition, a sheet-like specimen having a thickness of about 3 mm was made, applied on an aluminum plate and then exposed outdoors (Takasago-shi, Hyogo-ken) in a state of the north side inclined at an angle of 45 degree. After 1 day, 4 days and 7 days, tack was evaluated by touching the surface with fingers. The results are shown in Table 1. The symbol >⊙ denotes a state which is completely free from tack, and the order of the symbols ⊙, ○, ○△, △, △× and × denotes that the condition becomes inferior.

### (Staining Properties)

Using a curable composition, a sheet-like specimen having a thickness of about 3 mm was made, applied on an aluminum plate and then exposed outdoors (Takasago-shi, Hyogo-ken) in a state of the north side inclined at an angle of 45 degree. After 2 weeks and 1 month, the degree of adhesion of dusts or sands onto the surface of the cured article was visually evaluated. The results are shown in Table 1. The symbol ⊙ denotes the same state as that before the exposure, and the order of the symbols ○, ○△, △, △× and × denotes that the state becomes inferior.

### (Weatherability)

Using a curable composition, an ISOH type specimen having a thickness of about 12 mm was made, cured at 23°C for 7 days and cured at 50°C for 7 days and then applied on an aluminum plate. Using a sunshine weatherometer manufactured by SUGA TEST INSTRUMENTS Co, . LTD., an accelerated weatherability test was carried out. The symbol ○ denotes that a state of the surface is the same as an initial state, whereas, the symbol × denotes that cracking was formed on the surface. Coloration of the cured article was visually observing the surface of the specimen. The results are shown in Table 1.

### (Recovery)

A sheet having a thickness of 3 mm was made by curing a curable composition at 23°C for 3 days and curing at 50°C for 4 days. The resultant sheet was cut into a No. 3 dumbbell, which was fixed at 100°C for 24 hours in a state of stretching a distance between marked lines of 20 mm to 40 mm (100% elongation). After releasing at 23°C, a recovery ratio (%) was measured from the proportion of recovery of the marked line after one hour. As the recovery ratio increases, recovery becomes excellent. The results are shown in Table 1.

### (Example 2)

In the same manner as in Example 1, except that 3 parts by weight of a photocurable resin (manufactured by Toa Gosei Co., Ltd. under the trade name of Allonix M309) was used in Example 1, a curable composition was prepared and then evaluated in the same manner as in Example 1. The results are shown in Table 1.

### (Example 3)

In the same manner as in Example 1, except that the polymer obtained in Synthesis Example 2 was used in the amount of 30 parts by weight based on 100 parts by weight of the polymer in Example 1, a curable composition was prepared and then evaluated in the same manner as in Example 1. The results are shown in Table 1.

### (Example 4)

In the same manner as in Example 3, except that a photopolymerization initiator (manufactured by Ciba Specialty Chemicals Inc. under the trade name of IRGACURE 127) was used in the amount of 1 part by weight based on 100 parts by weight of the polymer in Example 3, a curable composition was prepared and then evaluated in the same manner as in Example 1. The results are shown in Table 1.

### (Example 5)

In the same manner as in Example 3, except that a photopolymerization initiator (manufactured by Ciba Specialty Chemicals Inc. under the trade name of IRGACURE 907) was used in the amount of 1 part by weight based on 100 parts by weight of the polymer in Example 3, a curable composition was prepared and then evaluated in the same manner as in Example 1. The results are shown in Table 1.

### (Example 6)

In the same manner as in Example 3, except that a photopolymerization initiator (manufactured by Ciba Specialty Chemicals Inc. under the trade name of IRGACURE 369) was used in the amount of 1 part by weight based on 100 parts by weight of the polymer in Example 3, a curable composition was prepared and then evaluated in the same manner as in Example 1. The results are shown in Table 1.

### (Example 7)

In the same manner as in Example 3, except that diisodecyl phthalate was used in the amount of 20 parts by weight based on 100 parts by weight of the polymer in place of 50 parts by weight of diisodecyl phthalate and 20 parts by weight of an epoxy-based plasticizer in Example 3, a curable composition was prepared and then evaluated in the same manner as in Example 1. The results are shown in Table 1.

### (Comparative Example 1)

In the same manner as in Example 1, except that 1 part of a photopolymerization initiator (manufactured by Ciba Specialty Chemicals Inc. under the trade name of IRGACURE 651) was not used, a curable composition was prepared and then evaluated in the same manner as in Example 1. The results are shown in Table 1.

### (Comparative Example 2)

In the same manner as in Example 2, except that 1 part of a photopolymerization initiator (manufactured by Ciba Specialty Chemicals Inc. under the trade name of IRGACURE 651) was not used, a curable composition was prepared and then evaluated in the same manner as in Example 1. The results are shown in Table 1.

### (Comparative Example 3)

In the same manner as in Example 3, except that 1 part of a photopolymerization initiator (manufactured by Ciba Specialty Chemicals Inc. under the trade name of IRGACURE 651) was not used, a curable composition was prepared and then evaluated in the same manner as in Example 1. The results are shown in Table 1.

### (Comparative Example 4)

In the same manner as in Example 7, except that 1 part of a photopolymerization initiator (manufactured by Ciba Specialty Chemicals Inc. under the trade name of IRGACURE 651) was not used, a curable composition was prepared and then evaluated in the same manner as in Example 1. The results are shown in Table 1.

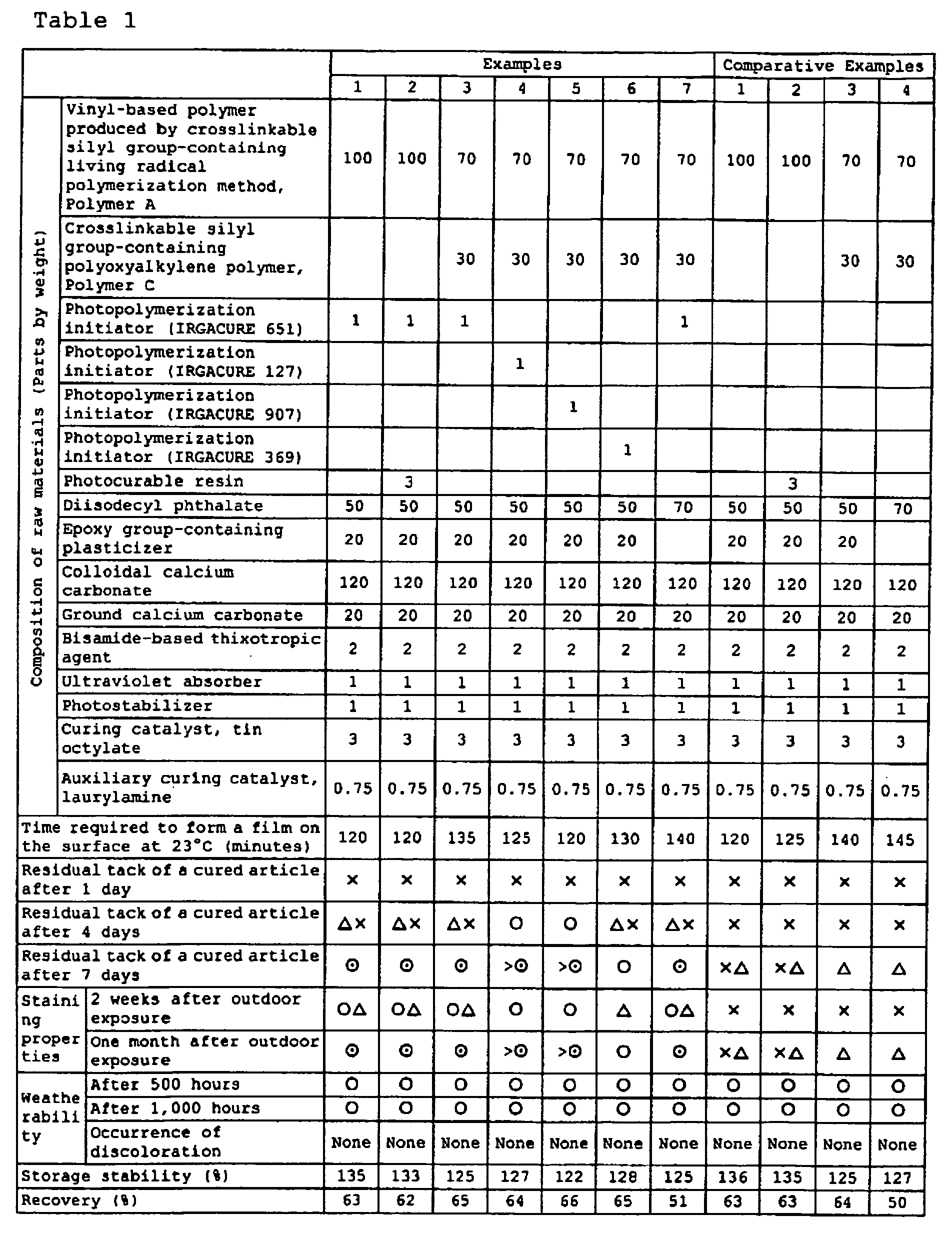

### (Example 8)

To 100 parts by weight of a polymer mixture obtained by adding 30 parts by weight of the polymer obtained in Synthesis Example 2 to 70 parts by weight of the polymer obtained in Synthesis Example 1, 65 parts by weight of diisodecyl phthalate (SANSOCIZER-DIDP) as a plasticizer, 150 parts by weight of surface-treated colloidal calcium carbonate (trade name: CCR), 30 parts by weight of ground calcium carbonate (trade name: Whitone SB), 2 parts by weight of a bisamide-based thixotropic agent (manufactured by Kusumoto Chemicals, Ltd. under the trade name of DISPARON 6500), 10 parts by weight of titanium dioxide (manufactured by DuPont under the trade name of Ti-Pure R-902), 1 part by weight of a benzotriazole-based ultraviolet absorber (trade name: Tinuvin 327) and 1 part by weight pf a hindered amine-based photostabilizer (trade name: Sanol LS770) were added and the mixture was kneaded, followed by dispersion through passing through a three paint roll once. The resultant mixture was transferred to a 5-liter mixer equipped with a heater and then dehydrated under reduced pressure while heating at 120°C to obtain a composition containing 500 ppm of moisture. After cooling to 30°C, 0.5 parts by weight of a photopolymerization initiator (manufactured by Ciba Specialty Chemicals Inc. under the trade name of IRGACURE 651), 3 parts by weight of vinyltrimethoxysilane and 2 parts by weight of N-(β-aminoethyl)-γ-aminopropyltrimethoxysilane as silane coupling agents, and 2 parts by weight of dibutyltin bisacetylacetonate as a tin-based curing catalyst were added, followed by sufficient mixing to obtain a one-pack type curable composition.

In the same manner as in Example 1, except that the following conditions were changed with respect to the time required to form a film of a curable composition on the surface at 23°C, residual tack, weatherability and staining properties, the evaluation was carried out. The results are shown in Table 2.

### (Residual Tack)

In the same manner as in the residual tack test in Example 1, except that a change with time under outdoor exposure was visually observed after 1 day, 7 days and 1 month, the evaluation was carried out.

### (Staining Properties)

In the same manner as in the staining properties test in Example 1, except that a change with time under outdoor exposure was visually observed after 1 month and 3 months, the evaluation was carried out.

### (Weatherability)

In the same manner as in the weatherability test in Example 1, except that the outdoor exposure time was 3 months, coloration properties of the cured article was observed.

### (Tensile Characteristics)

A curable composition was cured at 23°C for 3 days and cured at 50°C for 4 days and then formed into a sheet having a thickness of 3 mm. In accordance with JIS K6251, the sheet was cut into a dumbbell having a size of No. 3 and the measurement was carried out at a testing rate of 200 mm/min under the conditions of 23°C and 55%RH (measuring device: autograph manufactured by Shimadzu Corporation).

### (Example 9)

In the same manner as in Example 8, except that the amount of a photopolymerization initiator (manufactured by Ciba Specialty Chemicals Inc. under the trade name of IRGACURE 651) was adjusted to 1 part by weight based on 100 parts by weight of a polymer mixture obtained by adding 30 parts by weight of the polymer obtained in Synthesis Example 2 to 70 parts by weight of the polymer obtained in Synthesis Example 1, a one-pack type curable composition was prepared. The resultant curable composition was evaluated in the same manner as in Example 8. The results are shown in Table 2.

### (Example 10)

In the same manner as in Example 8, except that 1 part by weight of a photopolymerization initiator (manufactured by Ciba Specialty Chemicals Inc. under the trade name of IRGACURE 651) and 2 parts by weight of tung oil as an air oxidation curable substance were added to 100 parts by weight of a polymer mixture obtained by adding 30 parts by weight of the polymer obtained in Synthesis Example 2 to 70 parts by weight of the polymer obtained in Synthesis Example 1, a one-pack type curable composition was prepared. The resultant curable composition was evaluated in the same manner as in Example 8. The results are shown in Table 2.

### (Comparative Example 5)

In the same manner as in Example 10, except that a photopolymerization initiator (manufactured by Ciba Specialty Chemicals Inc. under the trade name of IRGACURE 651) was not added, a curable composition was prepared. The resultant curable composition was evaluated in the same manner as in Example 8. The results are shown in Table 2.

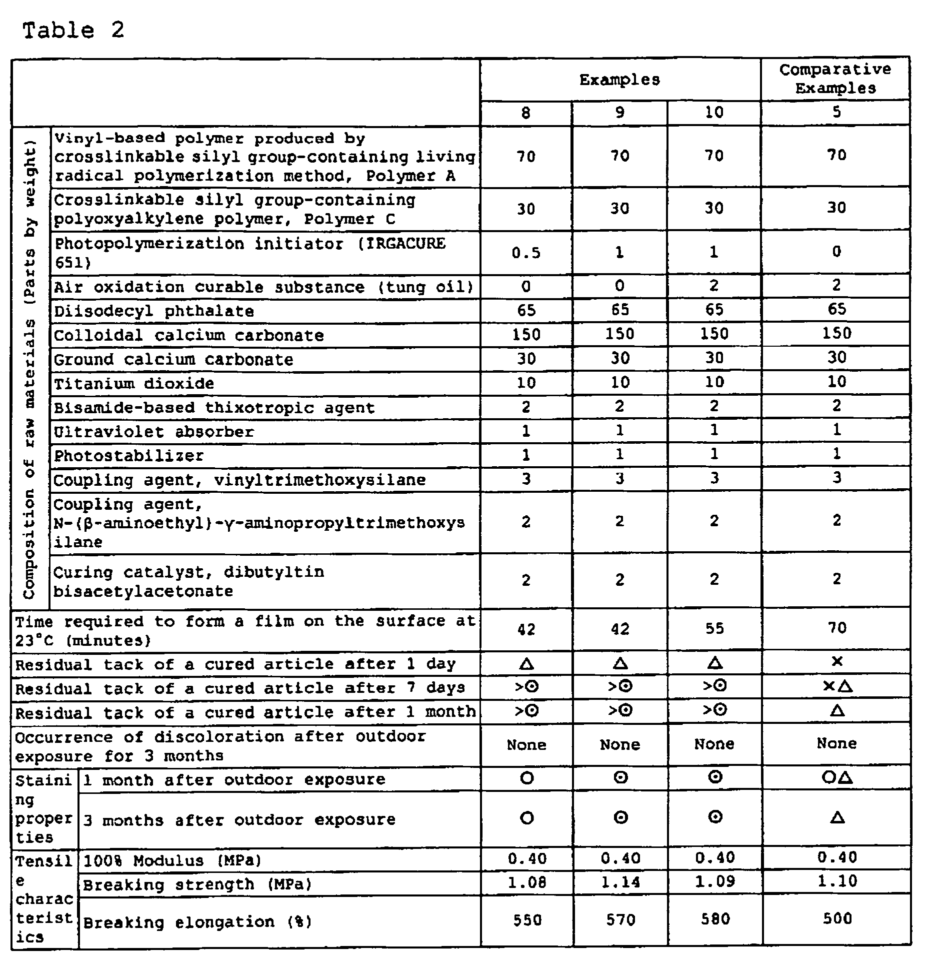

### INDUSTRIAL APPLICABILITY

The curable composition of the present invention is excellent in storage stability and is capable of forming a rubbery cured article which nearly eliminates surface tack within a short period after curing and maintains less stained surface for a long period, and also causes neither tack nor discoloration on the surface even when used outdoors for a long period. Therefore, the curable composition of the present invention is suited for use as a sealing material.

## Claims

1. A curable composition containing:
- a (meth)acrylic polymer (A) having at least one silyl group represented by the general formula (1)
-[Si(R¹)₂-_{b}(Y)_{b}O]ₘ-Si(R²)₃₋ₐ(Y)ₐ (1)
wherein both R¹ and R² represent an alkyl group having 1 to 20 carbon atoms, an aryl group having 6 to 20 carbon atoms, an aralkyl group having 7 to 20 carbon atoms, or a triorganosiloxy group represented by (R')₃SiO- (R' represents a monovalent hydrocarbon group having 1 to 20 carbon atoms and three R'(s) may be the same or different) and, when two or more R¹(s) or R²(s) exist, they may be the same or different; Y represents a hydroxyl group or a hydrolyzable group and, when two or more Y(s) exist, they may be the same or different; a represents 0, 1, 2 or 3; b represents 0, 1 or 2; and m represents an integer of 0 to 19, provided that a + mb ≥ 1;
- a photopolymerization initiator (B): and
- a reinforcing filler selected from the group consisting of: wood flour, pulp, cotton chip, asbestos mica, walnut husk powder, rice hull powder, graphite, China clay, carbon black, ground calcium carbonate, colloidal calcium carbonate, magnesium carbonate, diatomaceous earth, calcined clay, clay, talc, titanium oxide, bentonite, organic bentonite, ferric oxide, red iron oxide, fine aluminum powder, flint power, zinc oxide, active zinc oxide, zinc dust, zinc carbonate, shirasu (volcanic soil) balloon, glass fiber, glass filament, carbon fiber, Kevlar fiber, and polyethylene fiber.

2. The curable composition according to claim 1, further containing (C) a polyether-based polymer having at least one silyl group represented by the general formula (1):
-[Si(R¹)_{2-b}(Y)_{b}O]ₘ-Si(R²)₃₋ₐ(Y)ₐ (1)
wherein both R¹ and R² represent an alkyl group having 1 to 20 carbon atoms, an aryl group having 6 to 20 carbon atoms, an aralkyl group having 7 to 20 carbon atoms, or a triorganosiloxy group represented by (R')₃SiO- (R' represents a monovalent hydrocarbon group having 1 to 20 carbon atoms and three R'(s) may be the same or different) and, when two or more R¹(s) or R²(s) exist, they may be the same or different; Y represents a hydroxyl group or a hydrolyzable group and, when two or more Y(s) exist, they may be the same or different; a represents 0, 1, 2 or 3; b represents 0, 1 or 2; and m represents an integer of 0 to 19, provided that a + mb ≥ 1 is to be satisfied.

3. The curable composition according to claim 1 or 2, wherein a ratio of a weight average molecular weight (Mw) to a number average molecular weight (Mn), (Mw/Mn), measured by gel permeation chromatography of the vinyl-based polymer (A) is less than 1.8.

4. The curable composition according to any one of claims 1 to 3, wherein the vinyl-based polymer (A) is produced by a living radical polymerization method.

5. The curable composition according to any one of claims 1 to 4, wherein the vinyl-based polymer (A) is produced by an atom transfer radical polymerization method.

6. The curable composition according to any one of claims 1 to 5, wherein the vinyl-based polymer (A) has at least one silyl group represented by the general formula (1) at the molecular chain terminus.

7. The curable composition according to any one of claims 1 to 6, wherein the vinyl-based polymer (A) is a polymer obtained by the following steps of:
(1) producing a vinyl-based polymer having halogen at a terminus by radical polymerization of vinyl-based monomer using an organic halide or a halogenated sulfonyl compound as an initiator, and using a transition metal complex as a catalyst;
(2) producing a vinyl-based polymer having an alkenyl group at a terminus by reacting with an oxyanion having an alkenyl group thereby substituting a halogen; and
(3) reacting with a hydrosilane compound having a silyl group represented by the general formula (1).

8. The curable composition according to any one of claims 2 to 7, wherein the polyether-based polymer (C) is essentially a polypropylene oxide.

9. The curable composition according to any one of claims 1 to 8, wherein the photopolymerization initiator (B) is a photoradical initiator.

10. A sealing material obtained by using the curable composition according to any one of claims 1 to 9.

## Patentansprüche

1. Härtbare Zusammensetzung, enthaltend:
ein (Meth)acrylpolymer (A) mit wenigstens einer Silylgruppe, die dargestellt ist durch die allgemeine Formel (1)
-[Si(R¹)_{2-b}(Y)_{b}O]ₘ-Si(R²)₃₋ₐ(Y)ₐ (1)
wobei sowohl R¹ als auch R² eine Alkylgruppe mit 1 bis 20 Kohlenstoffatomen, eine Arylgruppe mit 6 bis 20 Kohlenstoffatomen, eine Aralkylgruppe mit 7 bis 20 Kohlenstoffatomen oder eine Triorganosiloxygruppe darstellen, die dargestellt ist durch (R')₃SiO-, wobei R' eine einwertige Kohlenwasserstoffgruppe mit 1 bis 20 Kohlenstoffatomen darstellt und drei R' identisch oder verschieden von einander sein können und, wenn zwei oder mehr R¹ oder R² vorliegen, diese identisch oder verschieden voneinander sein können; Y eine Hydroxylgruppe oder eine hydrolysierbare Gruppe darstellt und, wenn zwei oder mehr Y vorliegen, diese identisch oder verschieden voneinander sein können; a 0, 1, 2 oder 3 darstellt; b 0, 1 oder 2 darstellt und m eine ganze Zahl zwischen 0 und 19 darstellt, vorausgesetzt, daß a + mb ≥ 1;
- einen Photopolymerisationsstarter (B) und
- einen Verstärkungsfüllstoff, der aus der Gruppe gewählt ist, die besteht aus:
Holzmehl, Zellstoff, Baumwollchip, Asbest, Mica, Wainußschalenpulver, Reisrumpfpuder, Graphit, China-Ton, Ruß, gemahlenes Kalziumcarbonat, kolloidales Kalziumcarbonat, Magnesiumcarbonat, Diatome-Erde, kalzinierter Ton, Ton, Talk, Titanoxid, Bentonit, organischer Bentonit, Eisen(III)oxid, rotes Eisenoxid, Feinaluminiumpulver, Feuersteinpulver, Zinkoxid, aktives Zinkoxid, Zinkstaub, Zinkcarbonat, Shirasu-Kugeln (Vulkansand), Glasfaser, Glasfilament, Kohlefaser, Kevlarfaser und Polyethylenfaser.

2. Härtbare Zusammensetzung nach Anspruch 1, ferner enthaltend (C) ein polyetherbasiertes Polymer mit wenigstens einer Silylgruppe, die dargestellt ist durch die allgemeine Formel (1):
-[Si(R¹)_{2-b}(Y)_{b}O]ₘ-Si(R²)₃₋ₐ(Y)ₐ (1)
wobei sowohl R¹ als auch R² eine Alkylgruppe mit 1 bis 20 Kohlenstoffatomen, eine Arylgruppe mit 6 bis 20 Kohlenstoffatomen, eine Aralkylgruppe mit 7 bis 20 Kohlenstoffatomen oder eine Triorganosiloxygruppe darstellen, die dargestellt ist durch (R')₃SiO- (R' stellt eine einwertige Kohlenwasserstoffgruppe mit 1 bis 20 Kohlenstoffatomen dar und drei R' können identisch oder verschieden von einander sein) und, wenn zwei oder mehr R¹ oder R² vorliegen, diese identisch oder verschieden voneinander sein können; Y eine Hydroxylgruppe oder eine hydrolysierbare Gruppe darstellt und, wenn zwei oder mehr Y vorliegen, diese identisch oder verschieden voneinander sein können; a 0, 1, 2 oder 3 darstellt; b 0, 1 oder 2 darstellt und m eine ganze Zahl zwischen 0 und 19 darstellt, vorausgesetzt, daß a + mb ≥ 1 zu erfüllen ist.

3. Härtbare Zusammensetzung nach Anspruch 1 oder 2, wobei ein Verhältnis von einem durchschnittlichen Molekulargewicht (Mw) zu einer durchschnittlichen Molekulargewichtszahl (Mn), (Mw/Mn), gemessen durch Gelpermeationschromatographie, von dem vinylbasierten Polymer (A) weniger als 1,8 ist.

4. Härtbare Zusammensetzung nach einem der Ansprüche 1 bis 3, wobei das vinylbasierte Polymer (A) durch ein Polymerisationsverfahren mit lebenden Radikalen hergestellt ist.

5. Härtbare Zusammensetzung nach einem der Ansprüche 1 bis 4, wobei das vinylbasierte Polymer (A) durch ein Atomüberführungsradikalpolymerisationsverfahren hergestellt ist.

6. Härtbare Zusammensetzung nach einem der Ansprüche 1 bis 5, wobei das vinylbasierte Polymer (A) wenigstens eine Silylgruppe an dem Molekülkettenende hat, die dargestellt ist durch die allgemeine Formel (1).

7. Härtbare Zusammensetzung nach einem der Ansprüche 1 bis 6, wobei das viriylbasierte Polymer (A) ein Polymer ist, das durch die folgenden Schritte erhalten ist:
(1) Herstellen eines vinylbasierten Polymers mit Halogen an einem Ende durch Radikalpolymerisation von vinylbasiertem Monomer unter Verwendung eines organischen Halids oder einer halogenierten Sulfonylverbindung als ein Starter und Verwendung eines Übergangsmetallkomplexes als einen Katalysator,
(2) Herstellen eines vinylbasierten Polymers mit einer Alkenylgruppe an einem Ende durch Reagieren mit einem Oxyanion mit einer Alkenylgruppe unter Substituieren eines Halogens, und
(3) Reagieren einer Hydrosilanverbindung mit einer Silylgruppe, die durch die allgemeine Formel (1) dargestellt ist.

8. Härtbare Zusammensetzung nach einem der Ansprüche 2 bis 7, wobei das polyetherbasierte Polymer (C) im Wesentlichen ein Polypropylenoxid ist.

9. Härtbare Zusammensetzung nach einem der Ansprüche 1 bis 8, wobei der Photopolymerisationsstarter (B) ein Photoradikalstarter ist.

10. Dichtmaterial, das erhalten ist durch Verwendung der härtbaren Zusammensetzung nach einem der Ansprüche 1 bis 9.

## Revendications

1. Composition durcissable contenant :
- un polymère (méth)acrylique (A) présentant au moins un groupe silyle représenté par la formule générale (1)
-[Si(R¹)_{2-b}(Y)_{b}O]ₘ-Si(R²)₃₋ₐ(Y)ₐ (1)
dans laquelle à la fois R¹ et R² représentent un groupe alkyle ayant de 1 à 20 atomes de carbone, un groupe aryle ayant de 6 à 20 atomes de carbone, un groupe aralkyle ayant de 7 à 20 atomes de carbone, ou un groupe triorganosiloxy représenté par (R')₃SiO- (R' représente un groupe hydrocarboné monovalent ayant de 1 à 20 atomes de carbone et trois R' peuvent être identiques ou différents) et,
lorsque deux ou plusieurs R¹ ou R² existent, ils peuvent être identiques ou différents ; Y représente un groupe hydroxyle ou un groupe hydrolysable et, lorsque deux ou plusieurs Y existent, ils peuvent être identiques ou différents ; a représente 0, 1, 2 ou 3 ; b représente 0, 1 ou 2 ; et m représente un nombre entier de 0 à 19, à condition que a + mb ≥ 1 ;
- un initiateur de photopolymérisation (B) ; et
- une charge de renforcement choisie dans le groupe constitué de : sciure de bois, pâte à papier, copeaux de coton, amiante, mica, poudre de coquilles de noix, poudre d'écorces de riz, graphite, argile de chine, noir de carbone, carbonate de calcium broyé, carbonate de calcium colloïdal, carbonate de magnésium, diatomite, argile calcinée, argile, stéatite, oxyde de titane, bentonite, bentonite organique, oxyde ferrique, oxyde de fer rouge, fine poudre d'aluminium, poudre de silex, oxyde de zinc, oxyde de zinc actif, poussière de zinc, carbonate de zinc, ballon shirasu, (sol volcanique), fibre de verre, filament de verre, fibre de carbone, fibre Kevlar, et fibre de polyéthylène,

2. Composition durcissable selon la revendications 1, contenant de plus (C) un à base de polyéther présentant au moins un groupe silyle représenté par la formule générale (1) :
-[Si(R¹)_{2-b}(Y)_{b}O]ₘ-Si(R²)₃₋ₐ(Y)ₐ (1)
dans laquelle à la fois R¹ et R² représentent un groupe alkyle ayant de 1 à 20 atomes de carbone, un groupe aryle ayant de 6 à 20 atomes de carbone, un groupe aralkyle ayant de 7 à 20 atomes de carbone, ou un groupe triorganosiloxy représenté par (R')₃SiO- (R' représente un groupe hydrocarboné monovalent ayant de 1 à 20 atomes de carbone et trois R' peuvent être identiques ou différents) et, lorsque plusieurs R¹ ou R² existent, ils peuvent être identiques ou différents ; Y représente un groupe hydroxyle ou un groupe hydrolysable et, lorsque deux ou plusieurs Y existent, ils peuvent être identiques ou différents ; a représente 0, 1, 2 ou 3 ; b représente 0, 1 ou 2 ; et m représente un nombre entier de 0 à 19, à condition que a + mb ≥ 1 soit satisfait.

3. Composition durcissable selon la revendication 1 ou 2, dans laquelle un rapport d'une masse moléculaire moyenne en masse (Mw) à une masse moléculaire moyenne en nombre (Mn), (Mw/Mn), mesuré par chromatographie par perméation sur gel du polymère à base de vinyle (A) est inférieur à 1,8.

4. Composition durcissable selon l'une quelconque des revendications 1 à 3, dans laquelle le polymère à base de vinyle (A) est produit par un procédé de polymérisation radicalaire vivante.

5. Composition durcissable selon l'une quelconque des revendications 1 à 4, dans laquelle le polymère à base de vinyle (A) est produit par un procédé de polymérisation radicalaire par transfert d'atome.

6. Composition durcissable selon l'une quelconque des revendications 1 à 5, dans laquelle le polymère à base de vinyle (A) présente au moins un groupe silyle représenté par la formule générale (1) à la terminaison de chaîne moléculaire.

7. Composition durcissable selon l'une quelconque des revendications 1 à 6, dans laquelle le polymère à base de vinyle (A) est un polymère obtenu par les étapes suivantes :
(1) de production d'un polymère à base de vinyle présentant un atome d'halogène à une terminaison par polymérisation radicalaire d'un monomètre à base de vinyle en utilisant un halogénure organique ou un composé sulfonyle halogéné comme initiateur, et en utilisant un complexe de métal de transition comme catalyser ;
(2) de production d'un polymère à base de vinyle présentant un groupe alcényle à une terminaison par réaction avec un oxyanion présentant un groupe alcényle substituant par là un halogène ; et
(3) de réaction avec un composé hydrosilane présentant un groupe silyle représenté par la formule générale (1).

8. Composition durcissable selon l'une quelconque des revendications 2 à 7, dans laquelle le polymère à base de polyéther (C) est essentiellement un poly(oxyde de propylène).

9. Composition durcissable selon l'une quelconque des revendications 1 à 8, dans laquelle l'initiateur de photopolymérisation (B) est un initiateur photoradicalaire.

10. Matériau d'étanchéité obtenu en utilisant la composition durcissable selon l'une quelconque des revendications 1 à 9.
